# EUROPEAN PATENT APPLICATION

(11) **EP 4 738 535 A1**
(43) Date of publication of application: **06.05.2026**
(21) Application number: 25213386.3
(22) Date of filing: 04.11.2025
(51) Int. Cl.: H01M 10/613, H01M 10/625, H01M 10/6567, H01M 50/213, H01M 50/287, H01M 50/291, H01M 50/296, H01M 50/60

(54) **BATTERY PACK, VEHICLE, AND ASSEMBLING PROCESS OF BATTERY PACK**

(30) Priority: 04.11.2024 US 202463716203 P; 17.12.2024 US 202463735305 P; 03.11.2025 US 202519378170
(71) Applicant: Xing Power Inc., Victoria, Mahe (SC)
(72) Inventor: Lin, Yu-Chung, 333 Taoyuan City (TW); Chi, Yu-Shun, 333 Taoyuan City (TW); Dai, Shang-Chih, 333 Taoyuan City (TW); Liao, Tzu-Wen, 333 Taoyuan City (TW); Chuang, Chin-Yao, 333 Taoyuan City (TW); Tu, Kai-Hsiang, 333 Taoyuan City (TW); Tang, Tzu-Te, 333 Taoyuan City (TW); Huang, Li-Hsiang, 333 Taoyuan City (TW); Wu, I-Jung, 333 Taoyuan City (TW)
(74) Representative: Straus, Alexander

(57) **Abstract**

A battery pack includes a bottom cell holder (0520) with receiving structures that provide lateral and vertical forces to hold the battery cells (0020). The bottom cell holder (0520) includes a layer of lateral stopping structure (0521), a layer of vertical stopping structure (0522) and a plurality of venting structures (0523). The lateral stopping structure (0521) is configured to receive the battery cells (0020). The vertical stopping structure (0522) is configured for supporting weight of the battery cells (0020). The vertical stopping structure (0522) has multiple lateral channels (0526), which divide the vertical stopping structure (0522) into discrete islands. When a thermal event causes the battery cell (0020) to release gas from its bottom, the gas passes the lateral channels (0026) between the discrete islands and then enters the through hole of the venting structure (0523) and move vertically towards top end of the venting structure (0523).

## Description

### Field of the Invention

The present invention relates to the integration of battery cells that is configured as a device that can both store and release electric energy, particularly a machine that is assembled from battery cells wherein all the battery cells are immersed in thermal-management liquid while operating.

### Background of the Invention

Electrical energy is widely used to power modern machines. At various stages of the life cycle of electric energy, such as generation, distribution, and consumption, the temporary storage and subsequent release of energy as needed are both significant and necessary.

A rechargeable battery cell is a device that stores electrical energy by converting it into chemical energy (i.e., during the charging process) and then reconverting it into electrical energy (i.e., during the discharging process). Depending on the application, battery cells are integrated through a variety of methods to meet the required electrical performance parameters.

The integration of battery cells, or in other words, a battery cell assembly, is typically considered a subsystem of an electric equipment. In this disclosure, the phrase "electric equipment" may be referred to an electrically powered machinery, a vehicle that has an electric motor as a prime mover, or an electric energy storage system that is connected electrically to a grid or power plant, or a computing machine (e.g. a server with IT gears, circuit boards, and/or integrated circuit component that are configured to perform computational or information processing functions). Thus, it is also critical to consider the integration between the battery cell assemblies and the electrical equipment.

Furthermore, it is well-known that integrating battery cells involves incorporating thermal management systems and battery management systems.

With the above-mentioned design considerations, optimizing the integration of battery cells presents significant challenges.

### Summary of the Invention

### I. Problems Addressed

Optimizing the integration of battery cells requires simultaneously managing thermal performance, electrical interfaces, mechanical stack-up, and manufacturability. In immersion systems, the thermal-management liquid is configured to directly contact the battery cells while its movement is limited so modules can be stacked and sealed into a liquid-tight battery-pack enclosure. A coolant inlet and a coolant outlet may be installed on at least one side wall of the enclosure and configured to be the interface of inputting and outputting the thermal management liquid to the thermal management system. A battery cell assembly may comprise cell monitoring circuits, temperature sensors, and voltage sensors to facilitate battery management functions. The battery cell assembly comprises a bottom cell holder attached firmly to the bottom wall of the enclosure. The bottom cell holder comprises receiving structures that provide lateral and vertical forces to hold the battery cells. The bottom cell holder may be a rectangular plate and comprise a layer of lateral stopping structure, a layer of vertical stopping structure and a plurality of venting structures. The battery cells can be positioned on the bottom cell holder by the lateral stopping structure and the vertical stopping structure. The venting structures may include through holes that extended from the very lower end of the lateral stopping structure to the very top end of the venting structures, thereby allowing the gas or liquid flow vertically through the through holes. The bottom cell holder may have a connecting structure for connecting to other bottom cell holders.

### II. Technical Effects

Immersion cooling maintains battery-cell temperature within a predetermined range and can mitigate combustion. The receiving structures of the bottom cell holder can provide lateral and vertical forces to hold the battery cells. The battery cells can be positioned on the bottom cell holder by the lateral stopping structure and the vertical stopping structure. The inner side walls of the receiving holes limit the lateral movement of the battery cells. The vertical stopping structure protrudes inward in the radial direction of the receiving hole to support the battery cells, such that the vertical stopping structure limits the downward vertical movement of the battery cells. The through holes of venting structures allow the gas or liquid flow to vertically pass through. The vertical stopping structures may have multiple lateral channels, which divide the vertical stopping structures into discrete islands. Between those discrete islands, the channels distributed laterally are formed to allow liquid or gas released from the bottom of the battery cells to pass.

### III. Dependencies and Problem-Domain Containment

Root system architecture → battery pack layouts, sealing, manufacturing: Claim 1 establishes battery cell assemblies, the liquid-tight battery-pack enclosure configured to be integrated with an electrical equipment, high-voltage electrical connection, low-voltage signal connection, and the passages for the thermal management liquid to flow into and to exit the enclosure. ; Claim 2 provides signal opening structure for a signal communication interface; Claim 4 provides a bottom cell holder with a protrusion to position a holder connecting member; Claim 6 provides a bottom cell holder with lateral stopping structure, vertical stopping structure and venting structures; Claim 9 provides a battery-cell-connecting member connecting a plurality of BCs in parallel as a plurality of in-parallel connected groups of BCs, and connects the plurality of those in-parallel connected groups of BCs in series with at least one adjacent BC; Claim 10 the enclosure having side walls with internal passages for thermal management liquid; Claim 12 establishes vehicle with the battery pack integrated to the chassis; Claim 14 establishes assembling process of the battery pack.

### IV. Aspects Corresponding to Each Claim

A first aspect provides a battery pack including at least one battery cell assembly with a plurality of battery cells, a cell holder, at least one battery-cell-connecting member, and an enclosure comprising a front side wall, a right side wall, a left side wall, a rear side wall, a bottom wall and a top wall that are: integrated as a liquid-tight enclosure, and combined to define a space for accommodating the battery cells, the at least one battery-cell-connecting member and the thermal-management liquid, a coolant inlet and a coolant outlet respectively installed on the right side wall and the left side wall, at least one high-voltage connector installed on the front side wall; at least one busbar being connected to the high-voltage connector and the battery-cell-connecting member, and a battery management system comprising at least one cell monitoring unit. The enclosure is configured to be integrated with an electrical equipment. The battery cell assembly is monitored by the cell monitoring unit. An external connecting interface of the cell monitoring unit is assembled to the enclosure, which the external connecting interface is configured to connect a low-voltage connector of a downstream signal circuit.

Another aspect provides that the enclosure further comprises a signal opening structure. The signal opening structure is a through hole extended from the inner-surface of the front side wall, to the outer-surface of the front side wall, such a through hole provides a channel to accommodate the signal communication interface.

Another aspect provides that the through hole may further comprise a cylindrical-channel structure and a square-channel structure. The cylindrical-channel structure provides a trough-hole extended from the inner surface of the side wall to a middle section in the front side wall, such a through-hole has a round-edged-inner opening facing the BCA-space, and a round-edged outer-opening facing the external space of the enclosure. The cross-section of the round-edged inner opening is smaller than that of the round-edged outer opening, thereby allowing a portion of a middle section of the side wall to be visible from outside of the enclosure.

Another aspect provides that the battery pack comprises a holder connecting member and the cell holder comprises a bottom cell holder. The bottom cell holder is attached to a surface of the bottom wall. The bottom cell holder has a protrusion, the holder connecting member has a positioning hole, the protrusion is inserted into the positioning hole to position the holder connecting member on the bottom cell holder. The holder connecting member is configured to function as a supporting chassis to provide vertical supporting forces and is configured to function as a partition between the battery cell assemblies.

Another aspect provides that the holder connecting member comprises a plurality of fence structures that configured as a lateral channel for fluid to pass by spacing between the fence structures.

Another aspect provides that the cell holder comprises a bottom cell holder. The bottom cell holder comprises a layer of lateral stopping structure, a layer of vertical stopping structure and a plurality of venting structures. The lateral stopping structure is planar structure with receiving holes configured to receive the battery cells. The vertical stopping structure is attached at bottom of the lateral stopping structure and configured for supporting weight of the battery cells. The vertical stopping structure has multiple lateral channels, which divide the vertical stopping structure into discrete islands, wherein between those discrete islands, the lateral channels forming gaps between the bottom cell holder and the bottom wall. The lateral channels distributed laterally are formed to allow liquid or gas released from bottom of the battery cells to pass. The venting structures is located above the lateral channels of the vertical stopping structure and comprises through holes that extended from very lower end of the lateral stopping structure to very top end of the venting structures, thereby allowing gas or liquid flow vertically through the through holes. When a thermal event causes the battery cell to release gas from its bottom, the gas passes the lateral channels between the discrete islands and then enters the through hole of the venting structure and move vertically towards top end of the venting structure.

Another aspect provides that the bottom cell holder further comprises a plurality of vertical fluid channel structures located at opposite sides of the bottom cell holder, and the lateral channels are fluidically connected to the vertical fluid channel structures.

Another aspect provides that a horizontal projection area of the vertical stopping structure is smaller than a horizontal projection area of the bottom cell holder.

Another aspect provides that the battery-cell-connecting member electrically connects a plurality of BCs in parallel, and connects the plurality of BCs in series with at least one adjacent BC.

Another aspect provides that the right side wall and the left side wall each have at least one inner port, and the right side wall and the left side wall respectively define internal passages through which thermal management liquid can flow, each passage being in fluid communication with the inner port and the coolant inlet or the coolant outlet. The inner port allows the space to be in fluid communication with the internal passages..

Another aspect provides that a plurality of inner ports are evenly arranged on the inner wall surface of the right side wall and the left side wall, respectively along a side defined by the intersection between the inner wall surface and the top wall surface. The evenly distributed inner ports are configured to provide uniform flow of the thermal management liquid through the space.

A second aspect provides a vehicle including a chassis; and a battery system comprising the aforesaid battery pack integrated to the chassis to form a cell-to-chassis integration.

Another aspect provides that the battery system comprises at least one battery cell assembly, a B battery management system and a thermal management system; and the at least one battery cell assembly are formed by the battery cells electrically connected by the at least one battery-cell-connecting member.

A third aspect provides an assembling process of a battery pack including: assembling a plurality of side walls of an enclosure, wherein the side walls comprises a front side wall, a rear side wall, a right side wall and a left side wall, and high-voltage connectors and signal interface circuit boards are installed on the front side wall; installing a coolant inlet and a coolant outlet on the right side wall and the left side wall respectively; placing a bottom cell holder into the enclosure; assembling a holder connecting member to the bottom cell holder; assembling two barriers to the right side wall and the left side wall respectively; assembling a plurality of battery cells to the bottom cell holder within the enclosure; connecting a part of the high-voltage connector inside the enclosure to a contactor within the enclosure; assembling a plurality of connecting rods to a plurality of insertion holes of the bottom cell holder, wherein the connecting rods are located between the battery cells and protrude from above the battery cells; assembling a top cell holder to the connecting rods and above the battery cells; filling an interstitial material into the enclosure to fix the battery cells; disposing a plurality of battery-cell-connecting members on the top cell holder and assembling the battery-cell-connecting members to the battery cells; sequentially installing two busbars into the enclosure, so as to provide high-voltage electrical connection from inside to outside of the battery pack; installing a battery management system into the enclosure, so as to provide signal connection from inside to outside of the battery pack; installing circuit layout of a temperature sensor; installing a bottom wall on a bottom of the enclosure; and installing a top wall on a top of the enclosure and installing a plurality of signal outlets on the top wall.

Another aspect provides that before placing the bottom cell holder into the enclosure, a plurality of positioning members are placed for the bottom cell holder at corners of the enclosure; and
after placing the bottom cell holder into the enclosure, corners of the bottom cell holder abut against the positioning members.

Another aspect provides that the bottom cell holder has a protrusion, the holder connecting member has a positioning hole, and the protrusion is inserted into the positioning hole to position the holder connecting member on the bottom cell holder.

Another aspect provides that the bottom cell holder comprises a layer of lateral stopping structure with receiving holes and a layer of vertical stopping structure, the battery cells are received in the receiving holes of the lateral stopping structure and supported by the vertical stopping structure, such that the inner side walls of the receiving holes limit the lateral movement of the battery cells, and the vertical stopping structure limits the downward vertical movement of the battery cells.

Another aspect provides that a thickness of an interstitial material is not larger than a height of the venting structure above the lateral stopping structure, so that the interstitial material is not filled into a through hole of the venting structure.

Another aspect provides that before the battery cells are assembled to the bottom cell holder, thermal couple is adhered to bottom of the battery cell.

Another aspect provides that the top cell holder has a plurality of assembly holes, and the connecting rods are inserted into the assembly holes to position the top cell holder above the battery cells.

Another aspect provides that every three battery cells are connected in parallel by one battery-cell-connecting member.

Another aspect provides that the battery cells are electrically connected by the battery-cell-connecting members to form a plurality of battery cell assemblies electrically connected in series; and a plurality of battery-cell-assembly-electrodes are respectively assembled to the right side wall and the left side wall to connect the battery cell assemblies in series, so as to form a battery system.

Another aspect provides that the battery management system comprises a plurality of cell monitoring units and a plurality of flexible printed circuit boards, the flexible printed circuit boards are respectively assembled to the battery cell assemblies, and the cell monitoring units are respectively assembled to the flexible printed circuit boards.

Another aspect provides that a plurality of signal interface circuit boards of the cell monitoring units are assembled to the enclosure and configured to connect a low-voltage connector of a downstream signal circuit.

Another aspect provides that each of the busbars has one end contacting the battery-cell-connecting member and another end connecting the contactor.

Another aspect provides that a sealing ring is disposed between the bottom wall and the side wall to prevent a thermal management liquid from leaking; and a sealing ring is disposed between the top wall and the side wall to prevent the thermal management liquid from leaking.

This summary is provided for technical information and convenience of understanding and is not intended to identify essential features, to delimit the scope of protection, or to be used to interpret the claims.

### Brief Description of the Drawings

In the following, the invention is further illustrated by way of example, taking reference to the accompanying drawings thereof:
FIG. 1 is a conceptual circuit diagram showing a charging-discharging circuit (0040) including a battery cell assembly (0010), battery cells (0020), and battery cell strings (0030),
FIGS. 2A and 2B are perspective views of an embodiment of the battery cell assembly (0010); FIG. 2B is an exploded view showing a cell holder (0050), cell receiving structures (0060), and electrode surfaces (0024),
FIG. 2C is a perspective exploded view of a battery cell assembly (0010) showing battery-cell-connecting members (0026) and a cell holder (0050),
FIG. 2D is a detail view showing plate-holes (0029) of the battery-cell-connecting members (0026) engaged with vertical limiting structures (0070) of the cell holder (0050),
FIGS. 3A and 3B are conceptual perspective views showing two battery cell assemblies (0010) arranged in a stacked configuration (FIG. 3A) and in a side-by-side configuration (FIG. 3B),
FIG. 4A, FIG. 4B and FIG. 4C are top views of liquid-limiting casings (0080) of tubing form with a peripheral wall (0090),
FIGS. 5A and 5B are perspective views of a battery cell assembly (0010) arranged within a liquid-limiting casing (0080); FIG. 5B is a vertically exploded view showing a top opening (0094), a bottom opening (0095), and two cell holders (0050),
FIG. 6A is a top view of a rectangular liquid-limiting casing (0080) with side walls (0091) designated east (0096), south (0097), west (0098), and north (0099),
FIG. 6B is a view of a liquid-limiting casing (0080) showing inner wall surfaces (0101), outer wall-surfaces (0106), inner corners (0120), outer corners (0125), corner pillars (0130), and side walls (0091),
FIG. 6C is a view of a peripheral wall (0090) assembled from two partially surrounding walls,
FIG. 6D is a view of a peripheral wall (0090) assembled from four independent side walls (0091),
FIG. 7A, FIG. 7B and FIG. 7C are top views of a liquid-limiting casing (0080) showing cell-holder stopping structures (0140) extending inward from the inner surface of the peripheral wall (0090) and inner boundaries (0141); FIG. 7C includes a battery cell assembly (0010) with a cell holder (0050) and a section line A-A',
FIG. 7D is a vertical section view taken along A-A' of FIG. 7C showing relative positions of a peripheral wall (0090), a cell-holder stopping structure (0140), and spaces above and below the stopping structure,
FIG. 7E is a view of a liquid-limiting casing (0080) showing discrete cell-holder stopping structures (0140) on an inner-north surface (0105) of a north wall (0099),
FIG. 8A, FIG. 8B and FIG. 8C illustrate cell-holder fixing structures (0150) within a liquid-limiting casing (0080); FIG. 8A is a top view showing fixing structures (0150) with fastener holes (0151); FIG. 8B is a top view showing a cell holder (0050) with fixing fasteners (0152); FIG. 8C is a section view along B-B' showing a cell holder (0050), a stopping structure (0140), and fixing fasteners (0152),
FIGS. 9A and 9B are perspective views showing two stacked battery cell assemblies (0010),
FIG. 10A is a view of a liquid-limiting casing (0080) showing a top wall surface (0160), a bottom wall surface (0170), top surface interlocking structures (0180), and bottom surface interlocking structures (0190),
FIG. 10B is a view of two liquid-limiting casings (0080) stacked with the interlocking structures (0180, 0190) engaged,
FIGS. 11A and 11B show sealing features at an interface between liquid-limiting casings (0080); FIG. 11A shows a sealing-member-accommodating structure (0220) and a sealing-member-positioning structure (0210); FIG. 11B shows a sealing member (0200), such as an O-ring, disposed in the accommodating structure,
FIG. 12A is a view showing a vertical-wall-channel (0230) with a PCB of a cell monitoring device (0260) associated with a battery-cell-connecting member (0026),
FIG. 12B is a view showing a vertical-wall-channel (0230) with a conductor rod (0280),
FIG. 13 is a conceptual block diagram of an electric vehicle (3010) that is designed with a cell-to-chassis integration type battery system (3030),
FIG. 14 is a conceptual side view of an EV (3010) with a CTC integration type BS (3030),
FIG. 15 is a conceptual block diagram of a CTC integration type BS (3030),
FIG. 16A is a perspective view of the BS (3030) of this disclosure,
FIG. 16B is a perspective view showing the inside of the BCA-enclosure (3080),
FIG. 17A is a perspective view showing four BCAs (0010) are integrated into the BCA-space (3120) defined by the BCA-enclosure (3080),
FIG. 17B is an explosive diagram of the BS (3030),
FIG. 18A is a perspective view showing the bottom cell holder (0520),
FIG. 18B is a top view showing the bottom cell holder (0520),
FIG. 18C is a perspective view showing the bottom of the bottom cell holder (0520),
FIG. 18D is a conceptual side view of the bottom cell holder (0520), the BC (0020) and the bottom wall (3100), and
FIGs. 19A to 19L show the assembling process of the BS (3030).

### Detailed Description

Before the disclosure is described in greater detail, it should be noted that where considered appropriate, reference numerals have been repeated among the figures to indicate corresponding or analogous elements, which may optionally have similar characteristics.

To aid in describing the disclosure, directional terms may be used in the specification and claims to describe portions of the present disclosure (e.g., front, rear, left, right, top, bottom, etc.). Unless specifically defined, these directional definitions are intended to merely assist, in describing and claiming the disclosure and are not intended to limit the disclosure in any way.

The following contains specific information pertaining to example implementations in the present disclosure. The drawings and their accompanying detailed disclosure are directed to merely example implementations of the present disclosure. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including but not necessarily limited to"; it specifically indicates open-ended inclusion or membership in the disclosed combination, group, series, and the equivalent.

Additionally, for a non-limiting explanation, specific details, such as functional entities, techniques, protocols, standards, and the like, are set forth for providing an understanding of the disclosed technology. In other examples, detailed disclosure of well-known methods, technologies, systems, architectures, and the like are omitted so as not to obscure the present disclosure with unnecessary details.

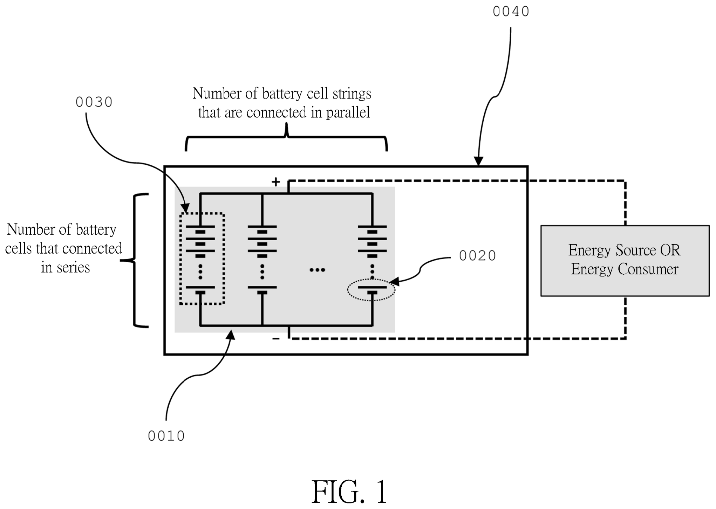

FIG. 1 is a conceptual circuit diagram of a charging-discharging circuit 0040. In FIG. 1, the charging-discharging circuit comprises a "battery cell assembly" 0010 (hereafter, BCA). The BCA 0010 is configured for meeting the required electrical performance, for example, a required target output voltage, Ampere or power. To meet such requirements, battery cells may be integrated, e.g. be assembled, in a mechanical and electrical manner, into a BCA 0010 to provide a collective performance.

As illustrated in FIG.1, in some embodiments, a BCA 0010 may comprise one or more battery cell strings 0030 (hereafter, BCS) that are connected electrically in parallel. The number of BCSs 0030 that are connected in parallel would determine the overall current output of the BCA 0010. Furthermore, each of the BCSs 0030 may comprise one or more battery cells 0020 (hereafter, BC) that are connected electrically in series. The number of BCs 0020 in each of the BCSs 0030, that are connected in series, would determine the overall voltage output of the BCS 0030 and the BCA 0010.

The charging-discharging circuit 0040 may be connected to an energy source such as a charging station therefore to charge the BCA 0010. The charging-discharging circuit may also be connected to an energy consumer such as a prime mover of an electric vehicle therefore power the prime mover.

In some embodiments (not shown in FIG. 1), the charging-discharging circuit 0040 may comprise more than one BCAs 0010, to meet certain design considerations such as design considerations for manufacturing and/or assembling process of the charging-discharging circuit 0040 itself or the assemble of charging-discharging circuit 0040 and the electrical equipment.

Referring back to the FIG. 1, depending on the technology used, BCs 0020 may have different specifications in aspects such as shape, electrical performance (such as: output voltage, current, power, charging rate, discharging rate, or working temperatures, etc.), materials, and other characteristics. For example, BCs 0020 can be encapsulated in various forms, such as cylindrical, prismatic, or pouch. In this disclosure, unless specifically specified, those skilled in this art should understand that the technological features disclosed hereby would not necessarily be limited to certain type of BCs 0020.

To be configured as the fundamental component to transfer electric energy into chemical energy, or reversely, a BC 0020 may comprise positive and negative electrodes as the interface between: 1. the charging-discharging circuit 0040 to which the BC 0020 connected; and 2. the cathode material and the anode material that is encapsulated in the BC 0020.

Furthermore, BCs 0020, configured as fundamental energy-storing building blocks of the BCA 0010 and the charging-discharging circuit 0040, must be connected electrically. No matter if a BC 0020 is a cylindrical, prismatic or pouch type, the electrodes of the BC 0020 are usually disposed on the top-end, on the bottom-end, or on both ends of the body of the BC 0020 respectively. In such cases, BCs 0020 are usually mechanically aligned side-by-side, so the electrodes of each of the BCs 0020 may be aligned approximately on the same plane. As a result, the body of BCA 0010 may comprise at least one electrode-surface 0024, where the electrodes of BCs 0020 are located and distributed.

In some embodiments, BCA 0010 may comprise battery-cell-connecting members 0026 (hereafter, BCCM) that are electrical conductors configured to connect to the electrodes of the BCs 0020. Through BCCM 0026, the BCs 0020 are electrically connected in parallel, or in series. For example, planar shaped conductor plates may be arranged on the electrode-surface 0024, to connect electrodes of the BCs 0020.

In this disclosure, when referring the direction, the terms "lateral" and "laterally" refer to the directions that lies on the plane on which the electrodes of BCs 0020 of a BCA 0010 be arranged on and refer to the directions that are parallel to the lines that lie on the plane on which the BCs 0020 of a BCA 0010 side-by-side distributed. In FIGs of this disclosure, the lateral directions are marked as the directions that are parallel to the lines that lie on the y-z plane. The term "top-viewed" means the section viewing from the positive x direction towards the minus x direction.

In this disclosure, the terms "vertical" and "vertically" means a direction that is not a "lateral direction" and is orthogonal to "any lateral direction". By this definition, the electrodes of the BC 0020 are usually disposed on at least one the vertical ends of the body of the BC 0020. In FIGs of this disclosure, the vertical direction refers to the direction along the x-direction.

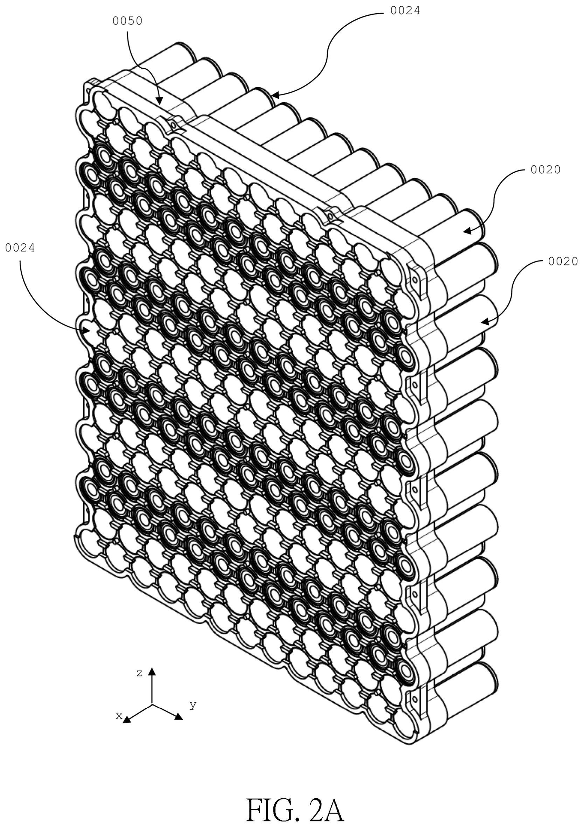

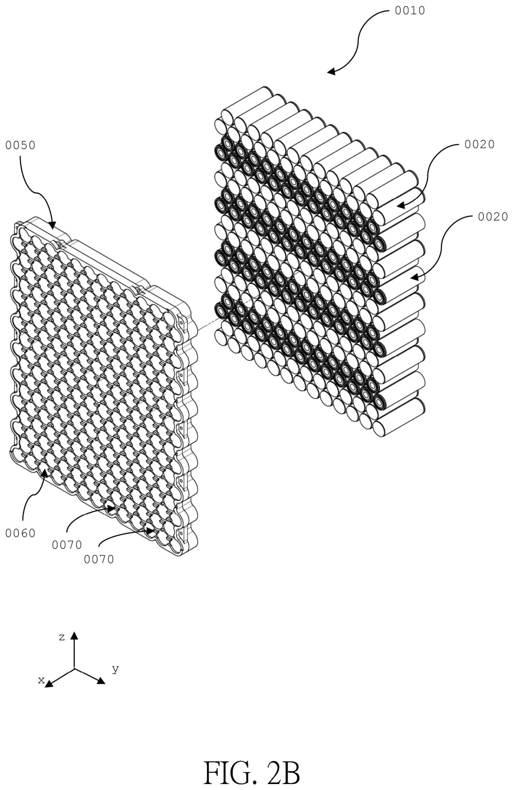

For example, referring to FIGS. 2A and 2B, that are perspective views of an embodiment of BCA 0010 (not all the components of the BCA 0010 are depicted); wherein FIG. 2B is an exploded view of FIG. 2A. In FIGS. 2A and 2B, the body of BCs 0020 may extend vertically (along the x-direction). Furthermore, the top-bottom axis of the BCs 0020 is parallel to the x-direction; and the BCs 0020 are side-by-side aligned along the y-z plane.

To integrate the BCs 0020 mechanically or structurally, in some embodiments, the BCA 0010 may comprise at least one cell holder 0050 which may have a primary function of limiting the position of each of a BC 0020 in a certain configuration. For example, the limiting of the position of a BC 0020 may be: 1. limiting the relative position of a specific BC 0020 respect to any other BCs 0020 that belong to the same BCA 0010 of the specific BC 0020; and 2. Limiting the relative position of a specific BC 0020 respect to the body of the BCA 0010. For example, in FIG. 2A, part of the body of each BCs 0020 are disposed in a corresponded cell receiving structures 0060 of the cell holder 0050. The cell receiving structures 0060 are distributed periodically along the lateral direction. Therefore, once the BCs 0020 are disposed in the cell receiving structures 0060, these BCs 0020 may by arranged with such periodically spatial distribution laterally.

In some embodiments, the cell holder 0050 may comprise vertical limiting structures 0070 to limit the vertical movement of the BCs 0020. The body and electrodes of all BCs 0020 of a BCA 0010 may be aligned in an identical vertical position, therefore, formed as the electrode surface 0024 of the BCA 0010. For example, in FIG. 2A, the BCA 0010 comprises two electrode surfaces 0024 at both sides of x-direction.

In some embodiments, adhesives might be used to provide the displacement limiting function. For example, after placing the BCs 0020 within the supporting holes of the cell holder 0050, glues might be introduced to fix the BCs 0020 additionally.

In some embodiments, to integrate the BCs 0020 electrically, the BCA 0010 may comprise BCCM 0026 that is located on the electrode-surface 0024. Furthermore, the BCA 0010 may comprise mechanical means that is configured to maintain the relative position between the electrode-surface 0024 and BCCM 0026 in static. For example, as the BCs 0020 are fixed mechanically with the cell holder 0050, BCCM 0026 may be connected mechanically with the cell holder 0050.

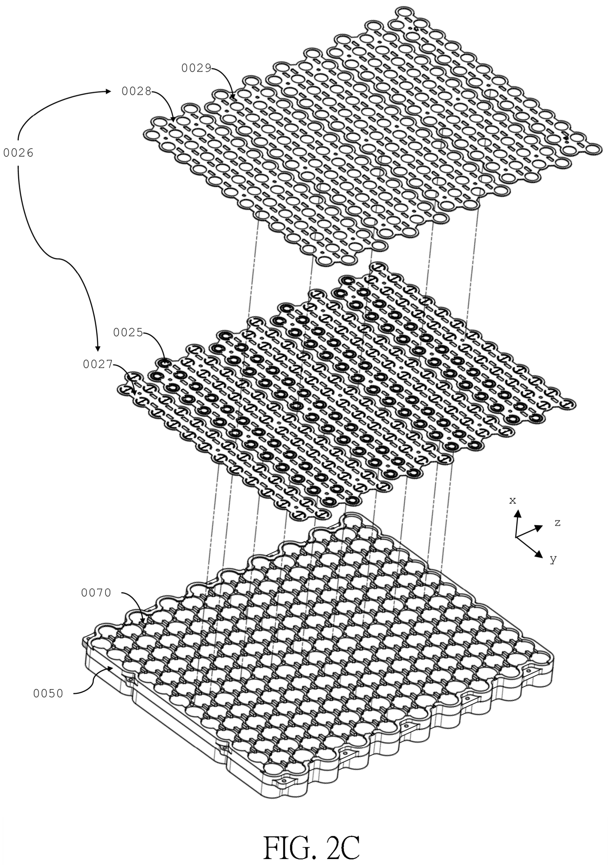

For example, in FIG. 2C, a perspective exploded view of an exemplary BCA 0010 (the BCs and some components are not shown), the BCA 0010 comprises a cell holder 0050 and BCCMs 0026. The BCCMs 0026 is conductive material that formed in plate-shaped. The BCCMs 0026 are configured to be disposed on the cell holder 0050, also, be disposed on the electrode-surface 0024 of the BCA 0010.

In some embodiments, the BCCM 0026 may comprise a cell-contact-plate 0027 and a current-transport-plate 0028.

The cell-contact-plate 0027 may be configured to directly contact the electrode of the BCs. Connecting processes such as welding, crimping, fastening, or the use of conductive adhesives, may be used to connect the cell-contact plate 0027 and the electrodes of the BCs. Furthermore, in some cases, the cell-contact plate 0027 may comprise a fusing welding structure 0025, that is configured to be melted when the current is overloaded.

The current-transport-plate 0028 may be configured to transport the collective current of multiple BCs 0020. In such a purpose, the current-transport-plate 0028 may have a greater thickness than the cell-contact-plate 0027. Furthermore, the current-transport-plate 0028 may have greater conductivity than the cell-contact-plate 0027. For example, the cell-contact-plate 0027 may be a nickel plate, and the current-transport-plate 0028 may be a copper plate.

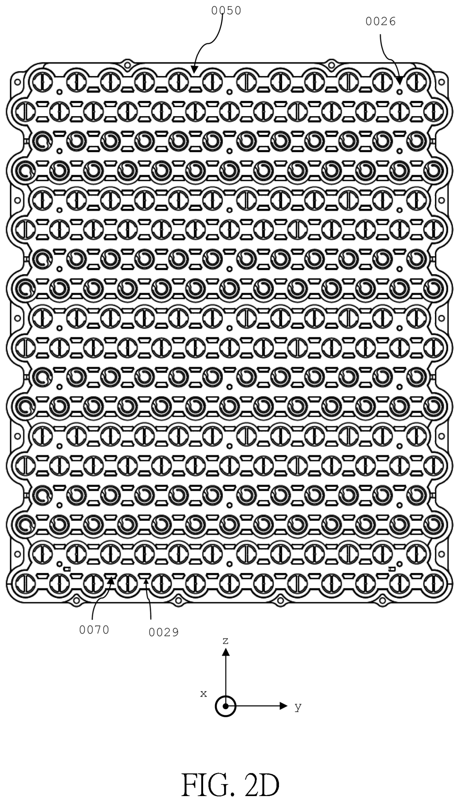

In some embodiments, the BCCM 0026 may comprise structures that are configured for arranging the BCCM 0026 on the cell holder 0050. For example, the BCCM 0026 may comprise extrusions or protrusions that are configured to be engaged with a hollow structure on the cell holder 0050. For another example, the BCCM 0026 may comprise holes that are configured to be engaged with extrusions or protrusions on the cell holder 0050. For example, in FIGS. 2C and 2D, the BCCMs 0026 comprises plate-holes 0029 that is engaged with the vertical limiting structures 0070 of the cell holder 0050. The vertical limiting structures 0070 penetrate through the plate holes 0029 of the BCCMs 0026 to limit the relative movement of the BCCMs 0026 respect to the cell holder 0050. For example, the lateral and vertical relative movement of the BCCMs 0026 respect to the cell holder 0050 may be limited.

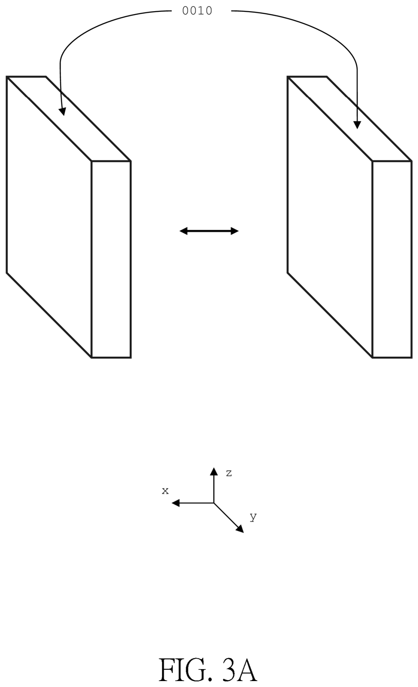

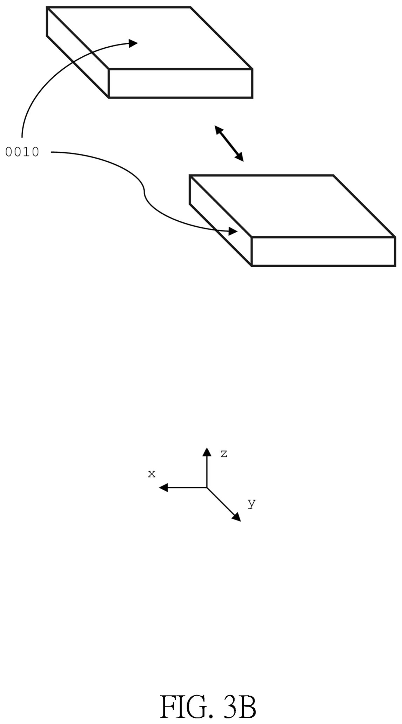

FIG. 3A and 3B are conceptual perspective views of the integration between two BCAs 0010. Depending on the available space to install the BCAs 0010 on the electric equipment, the BCAs 0010 may be integrated in a stacking manner or in a side-by-side manner. For example, in FIG. 3A, the BCAs 0010 are integrated in a stacking manner, and it's suitable to be arranged in a narrow and long space, such as the front and rear compartments of a passenger vehicle. In another example, in FIG. 3B, the BCAs 0010 are integrated in a side-by-side manner, and it's suitable to be arranged in a space with ample width but limited height, such as the floor space under the cabinet of a passenger vehicle.

In this disclosure, the terms "vertical" and "vertically" also refers to the stacking direction of the BCAs of stacking type integration. For example, in FIG. 3A, the stacking type integrated BCAs are stacked along the vertical direction, also, the x-direction.

To prevent the thermal runaway event, maintain the working temperature of the BCA 0010 and BCs 0020, or both. It is known to make the BCs 0020 directly contact thermal-management liquid, so that the thermal-management liquid may transport heat to maintain the working temperature of the BCs 0020 in a predetermined range or to prevent a combustion reaction. For example, the BCA(s) 0010 or BCs 0020 may be partially or entirely immersed in the thermal-management liquid. In the case of the entire immersion of the BCA(s) 0010, the BCA 0010 and some other components that are intended to be integrated with the BCA 0010 may direct contact with the thermal-management liquid, therefore has a better effect on thermal management.

To immerse the BCA 0010 in the thermal-management liquid, the BCA 0010 may be integrated with a liquid-limiting casing 0080 (hereafter, LLC). The LLC 0080 may be configured to limit the movement of the thermal-management liquid. For example, in the space described by the Cartesian coordinate system, certain volumes of thermal-management liquid may have displacement or velocity that may be described by a vector comprising components of unit-vectors of x, y, or z direction times coefficient respectively. LLC 0080 may comprise means to limit the movement of the thermal-management liquid in at least part of those six directions, to maintain the relative position between the BCA 0010 and the thermal-management liquid in state that the BCA 0010 is immersed in the thermal-management liquid.

In some embodiments, impervious materials may be used to form certain structures that entirely encapsulate or partially cover the thermal-management liquid, therefore to limit the movement of the thermal-management liquid in all directions or in some direction. For example, LLC 0080 may be formed as a tubing shape with two openings, such as triangular tube, square tube or round tube. The tubing shaped LLC 0080 may comprise a peripheral wall 0090 (or in other words, the circumferential wall).

In some embodiments, peripheral wall of the LLC 0080 may comprise impervious membranes to limit the movement of the thermal-management liquid.

In some embodiments, the LLC 0080 may comprise rigid structure such as impervious walls to limit the movement of the thermal-management liquid.

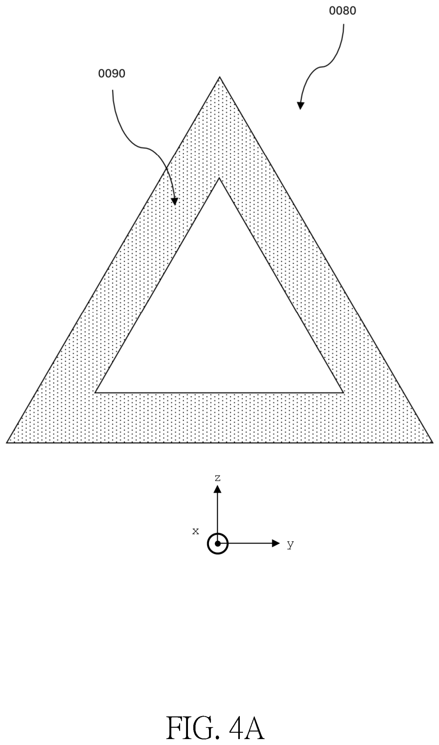

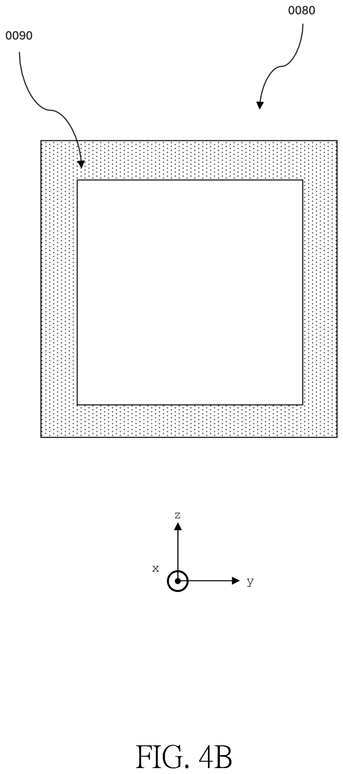

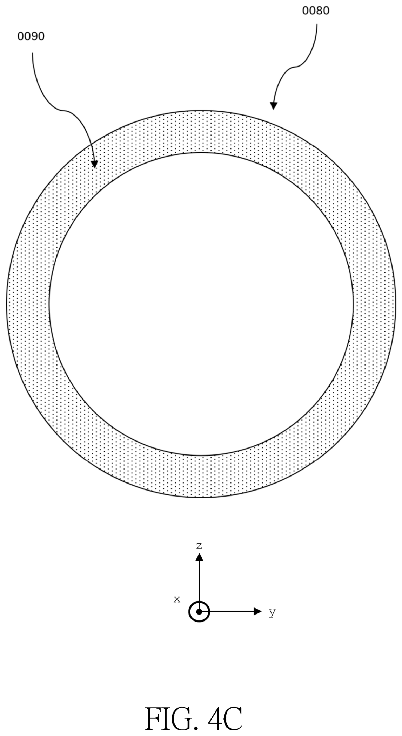

For example, FIGS. 4A, 4B and 4C are conceptual LLC 0080 in tubing structures depicted in top views. In other examples, the lateral view (i.e. top view) of the tubing structure may be asymmetrical geomatics. In FIGS. 4A, 4B and 4C, each of the depicted LLCs 0080 comprises a peripheral wall 0090 that surrounds a space laterally. The peripheral wall 0090 may extend vertically, i.e. along the x direction in FIGS. 4A, 4B and 4C. Therefore, the three-dimensional space surrounded by the LLC 0080 may be used to accommodate the thermal-management liquid, the BCA 0010, and some components that are intended to be integrated with the BCA 0010. With the impervious property of the peripheral wall 0090, the thermal-management liquid that accommodated in the LLC 0080 may only move in the vertical direction.

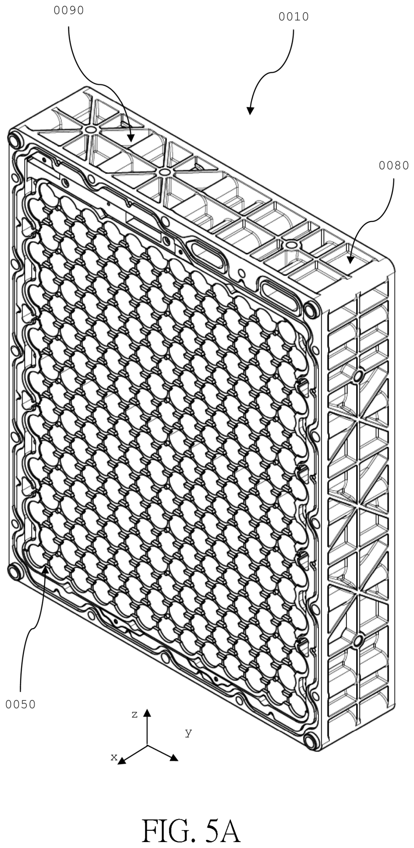

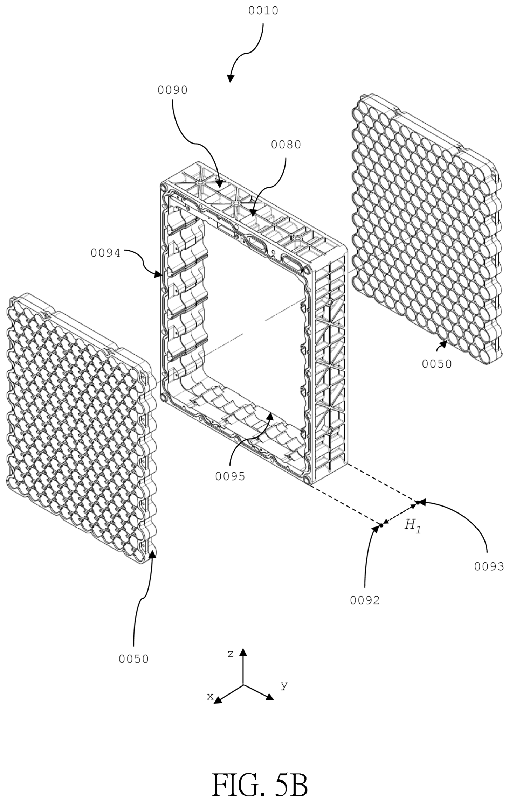

FIGS. 5A and 5B are perspective views of one exemplary embodiment of the BCA 0010, where not all components of the BCA 0010 are shown, for the purpose of clearly specifying the means to make the BCA 0010 be immersed in the thermal-management liquid. For example, the BCs 0020 are not shown in FIGS. 5A and 5B.

FIG. 5B is a vertically exploded perspective view of FIG 5A. In the embodiment of FIGS. 5A and 5B, the BCA 0010 comprises two cell holders 0050 that are integrated with the BCs 0020 (BCs 0020 are not shown in FIGS. 5A and 5B). The cell holders 0050, the BCs 0020, and some other not-shown components that are intended to be integrated with the BCA 0010 may be arranged within the space surrounded by the LLC 0080.

In the embodiments that the LLC 0080 is formed in a tubing shape, the peripheral wall 0090 may be formed as a material that extends between a top vertical position 0092 and a bottom vertical position 0093, along the vertical direction. At the top vertical position 0092, the inner-edge of the peripheral wall 0090 defines a top opening 0094 of the LLC 0080; and, at the bottom vertical position 0093, the inner edge of the peripheral wall 0090 may define a bottom opening 0095 of the LLC 0080. The top opening 0094 and the bottom opening 0095 may be configured as the entrance or exit of the space surrounded by the peripheral wall 0090. Components such as the BCs 0020, cell holders 0050 and other components that are intended to be arranged within the LLC 0080, may be arranged into the inside space of the LLC 0080 through at least one of the top opening 0094 and the bottom opening 0095.

For example, in the embodiment depicted in FIG. 5B, the peripheral wall is extended between the top vertical position 0092 and the bottom vertical position 0093. The vertical length of the LLC 0080 (that is, the height) is equal to the vertical distance between the top vertical position 0092 and the bottom vertical position 0093 H1. The two cell holders are disposed into the space surrounded by the peripheral wall 0090 through the top opening 0094 and the bottom opening 0095.

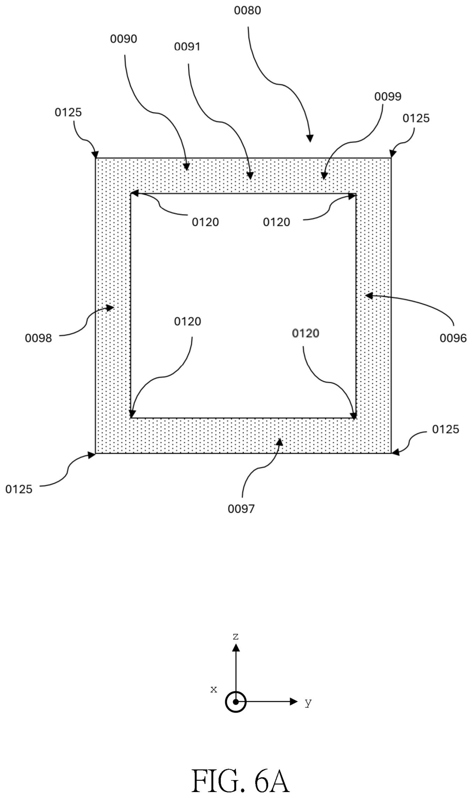

In some embodiments that the LLC 0080 are formed in a rectangular tubing shape, the peripheral wall 0090 of the LLC 0080 may further comprise four planar side walls 0091 that are arranged circumferentially surround and parallel to a vertical axis. For example, in FIG. 6A, a top view of an exemplary LLC 0080 is depicted. The LLC 0080 comprises four side walls 0091: an east wall 0096, a south wall 0097, a west wall 0098, and a north wall 0099, that are arranged circumferentially surround a vertical axis.

In some embodiments, the LLC 0080 may be manufactured through integral forming processes such as injection molding or die casting. Alternatively, a lathe machining process may be employed to produce the LLC 0080.

Referring to FIG. 6A-6B, in some embodiments that the LLC 0080 are formed in a rectangular tubing shape, the peripheral wall 0090 of the LLC 0080 may comprise four inner corners 0120 and four outer corners 0125. The four inner corners 0120 may further include: an inner-northeast corner 0121, an inner-southeast corner 0122, an inner-southwest corner 0123, and an inner-northwest corner 0124. The four outer corners 0125 may further comprise: an outer-northeast corner 0126, an outer-southeast corner 0127, an outer-southwest corner 0128, and an outer northwest-corner 0129.

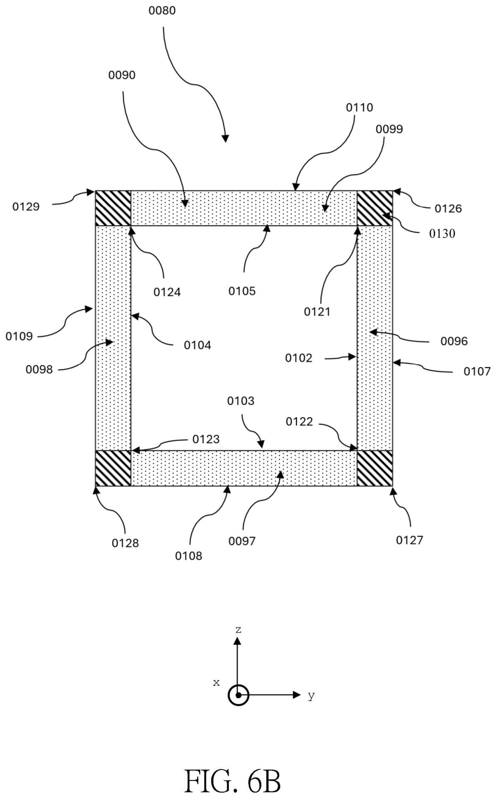

In some embodiments, each of the side walls may comprise an inner wall surface 0101 and an outer wall-surface 0106. The outer wall-surfaces 0106 of each side walls 0091 may be an outer planar surface that may extend between one of the two outer corner of the corresponding side wall 0091. For example, in FIG. 6B, the east wall 0096 comprises an outer-east surface 0107 that extends between the outer-northeast corner 0126 and the outer-southeast corner 0127; the south wall 0097 comprises a outer-south surface 0108 that extends between the outer-southeast corner 0127 and the outer-southwest corner 0128; the west wall 0098 comprises a outer-west surface 0109 that extends between the outer-southwest corner 0128 and the outer-northwest corner 0129; and the north wall 0099 comprises a outer-north surface 0110 that extends between the outer-northwest corner 0129 and the outer-northeast corner 0126.

Furthermore, the inner wall surfaces 0101 of each side walls 0091 may be an inner planar surface that extends between one of the two adjacent inner corners of the underlying side wall 0091. For example, in FIG. 6B, the east wall 0096 comprises an inner-east surface 0102 that extends between the inner-northeast corner 0121 and the inner-southeast corner 0122; the south wall 0097 comprises an inner-south surface 0103 that extends between the inner-southeast corner 0122 and the inner-southwest corner 0123; the west wall 0098 comprises an inner-west surface 0104 that extends between the inner-southwest corner 0123 and the inner-northwest corner 0123; and the north wall 0099 comprises an inner-north surface 0105 that extends between the inner-northwest corner 0124 and the inner-northeast corner 0121.

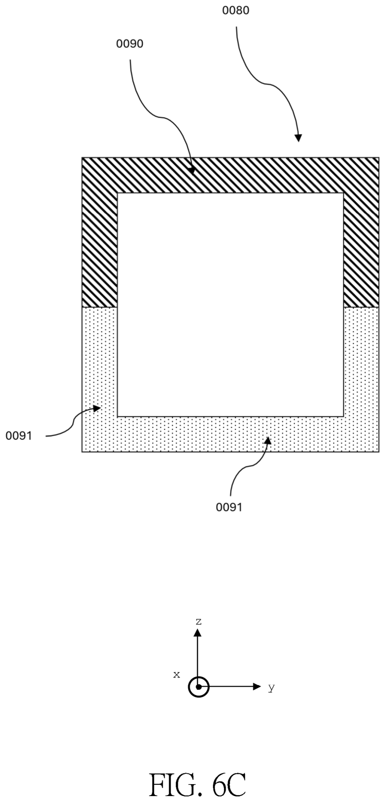

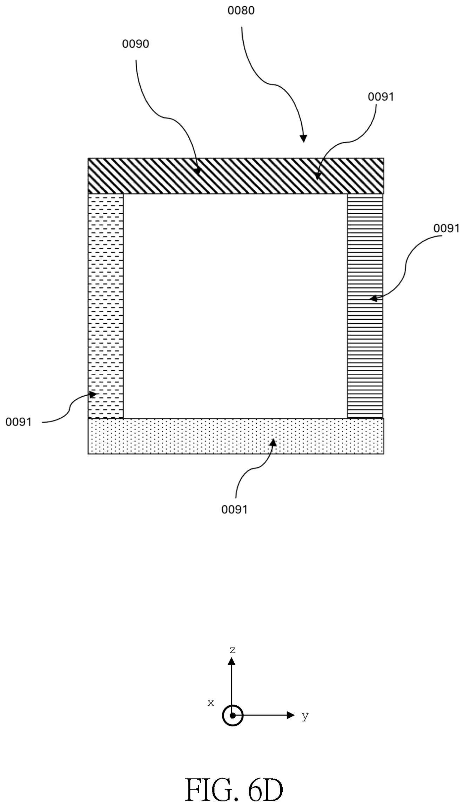

In some embodiments, the peripheral wall 0090 may be assembled by discrete components. For example, in FIG. 6B, the LLC 0080 comprises four corner pillars 0130 that are independent components to be assembled with the side walls 0091 (i.e. the east wall 0096, the south wall 0097, the west wall 0098, and the north wall 0099) to form the peripheral wall 0090. In other examples, referring to FIG. 6C, the peripheral wall 0090 may be assembled by two partially-surrounding walls. In other examples, referring to FIG. 6D, the peripheral wall 0090 may be assembled by four independent side walls 0091.

In some embodiments, the LLC 0080 may comprise structures that are configured for the integration of the cell holder 0050 and the LLC 0080. In the cases that the LLC 0080 is in the tubing shape such as depicted in FIGS. 4A, 4B and 4C, the cell holder 0050 may be disposed in the space surrounded by the LLC 0080 through one of the top opening 0094 and the bottom opening 0095 at the two vertical ends of the tubing structure. The LLC 0080 may comprise at least one cell-holder stopping structure 0140 that extends from one of the inner surfaces of the peripheral wall 0090 and extends inwardly along the lateral direction.

The vertically relative position on the inner surface of the peripheral wall 0090, and the vertical size of the cell-holder stopping structure 0140 would define the vertical depth (vertical range) that the cell holder 0050 may arrive vertically in the space surrounded by the LLC. Therefore, such a lateral structure (i.e. the cell-holder stopping structure 0140) may limit the vertical movement of the cell holder 0050, by providing a vertical force on the cell holder 0050. Such vertical force is against the vertical movement of the cell holder 0050 in the space surrounded by the peripheral wall 0090.

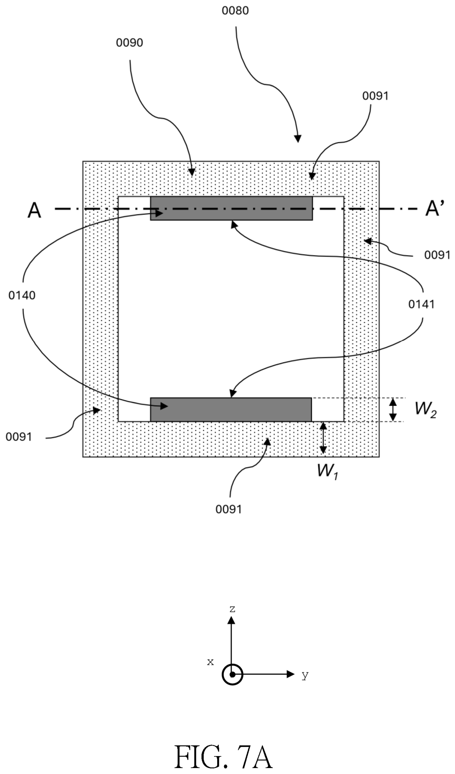

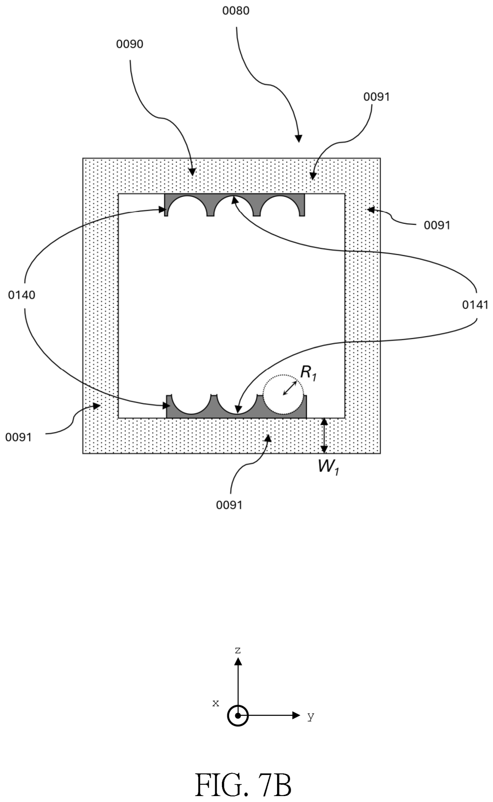

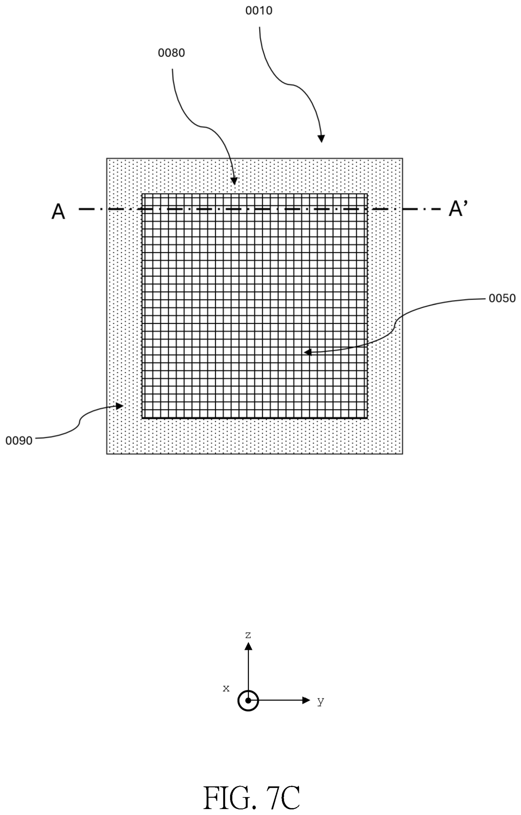

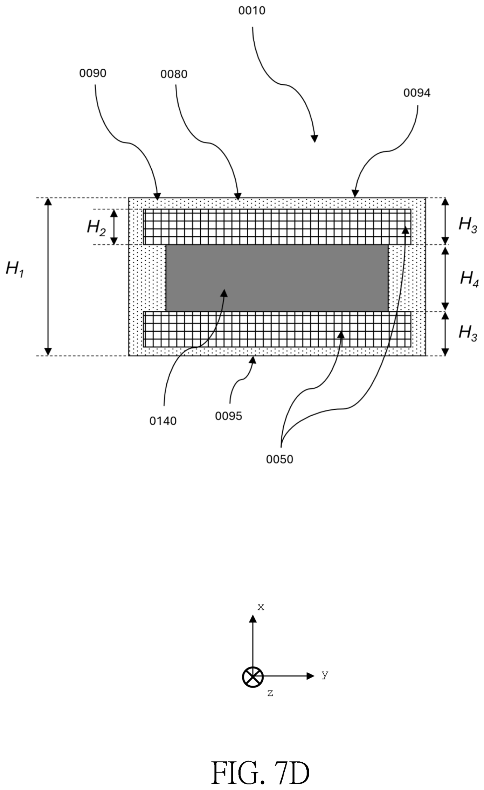

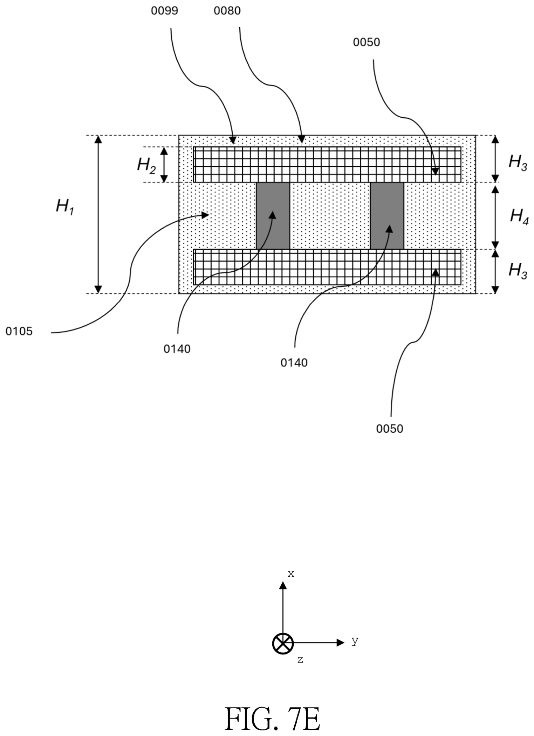

For example, FIGS. 7A, 7B, 7C, 7D and 7E are conceptual diagrams of an exemplary BCA 0010. FIGS. 7A, 7B and 7C are top-view of exemplary BCAs 0010. In FIG. 7A, the BCA 0010 (hidden in the FIG. 7A) is integrated with an LLC 0080, and the LLC 0080 comprises a peripheral wall 0090. The peripheral wall comprises four side walls 0091. The LLC 0080 further comprises two cell-holder stopping structures 0140 that extend laterally and inwardly from the inner surface of the peripheral wall 0090. Each of the two cell-holder stopping structures 0140 may comprise an inner boundary 0141. The lateral section view (top-view) of the inner boundary 0141 may be a line on the lateral plane. In the embodiment depicted in FIG. 7A, each of the inner boundaries 0141 is a planar surface that is parallel to the side wall on which the cell-holder stopping structure 0140 disposed; and the lateral section view of the inner boundary 0141 is a straight line along the y direction. In FIG. 7A, the maximum distance between the inner boundary 0141 and the inner surface of the side wall 0091 on which the cell-holder stopping structure 0140 disposed is a constant number; for example, in FIG. 7A, such a constant distance is equal to W2.

In other embodiments, the inner boundaries 0141 may not be a plane, that is, the distance between the inner boundary 0141 and the inner surface of the side wall 0091 on which the cell-holder stopping structure 0140 may not be a constant number. For example, in FIG. 7B, the inner boundaries 0141 are curved surfaces; and the lateral section view of the inner boundaries 0141 are curved lines on the lateral plane.

In some embodiments, such as depicted in FIG. 7B, the curve-shaped inner boundaries 0141 of the cell-holder stopping structure 0140 may provide additional space to accommodate components of the BCA 0010, such as the BCs 0020 or others. In some cases, the curved part of the inner boundaries 0141 may comprise a lateral section view that is a curved line with a radius of curvature equal to or greater than the radius of the BC's laterally section-viewed radius. Therefore, the BCs 0020 may be disposed in the space that is partially surrounded by the curved parts of the inner boundaries 0141 of the cell-holder stopping structures 0140.

In FIG. 7C, an exemplary BCA 0010 is depicted. The BCA 0010 comprises a cell holder 0050 that is disposed in the space that is surrounded by the peripheral wall 0090 of the LLC 0080. The dashed line A-A' is marked respect to the section that is shown in FIG. 7D.

In FIG. 7D, the vertical section view along the dashed line A-A' in FIG. 7C is depicted. The BCA 0010 is integrated with an LLC 0080 which further comprises a peripheral wall 0090. The LLC also comprises two cell holders 0050; and two cell-holder stopping structures 0140 (only one is shown). The cell-holder stopping structure 0140 is located at the inner surface of the peripheral wall 0090. Vertically, the middle of the cell-holder stopping structure 0140 is aligned with the middle of the peripheral wall 0090.

In some embodiments, the vertical length (hereafter, height) of the cell-holder stopping structure 0140 is less than the height of the peripheral wall 0090; therefore, the difference between the height of the cell-holder stopping structure 0140 and the height of the peripheral wall 0090 may provide a space to accommodate the cell holder 0050. For example, in FIG. 7D, the height of the cell-holder stopping structures 0140 is equal to H4, and the height of the peripheral wall 0090 is equal to H1. The difference between H1 and H4 is equal to two times of the H3. Therefore, the cell holder 0050 may be accommodated in the space between the top opening 0094 of the LLC 0080 and the cell-holder stopping structure 0140, such a space has a height equal to H3; and the cell holder 0050 may also be accommodated in the space between the bottom opening 0095 of the LLC 0080 and the cell-holder stopping structure 0140, such a space has a height equal to H3.

In some embodiments, the LLC 0080 may comprise discrete cell-holder stopping structures 0140 that are disposed on the inner surface of a side wall 0091. For example, referring to FIG. 7E, the LLC 0080 comprises a north wall 0099, and two cell-holder stopping structures that are disposed on the inner-north surface 0105.

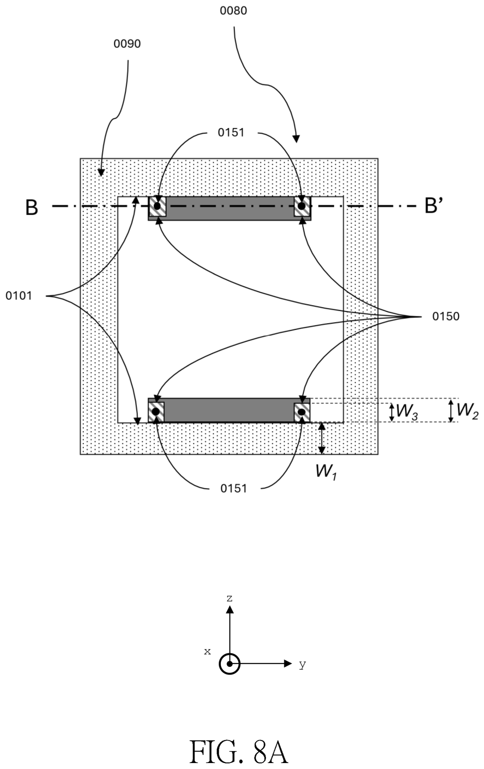

In some embodiments, the LLC 0080 may comprise at least one cell-holder fixing structure 0150 that provides mechanical means to limit the displacement of the cell holder in every direction. For example, referring to FIG. 8A, the top-viewed LLC 0080 comprises four cell-holder fixing structures 0150 that are extended from the inner wall surfaces 0101 of the peripheral wall 0090. In this embodiment, the cell-holder fixing structures 0150 comprises fastener holes 0151 for using fixing fasteners to limit the relative movement between the LLC 0080 and the cell holder 0050. In some embodiments, the cell-holder fixing structure 0150 and the cell-holder stopping structure may be different in multiple aspects such as shape, lateral position, and vertical position.

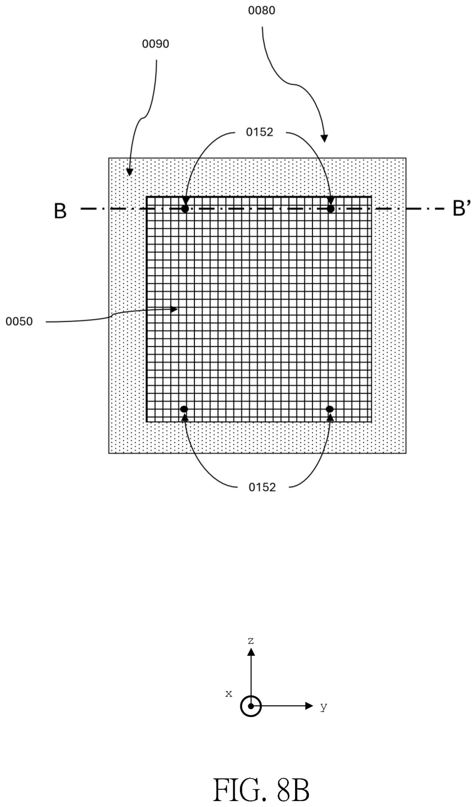

Referring to FIG. 8B, a top view of the LLC 0080 is depicted. In FIG. 8B, the cell holder 0050 is disposed in the space surrounded by the peripheral wall of the LLC 0080. The LLC 0080 comprises four fixing fasteners 0152 that are vertically inserted through the cell holder 0050 and the cell-holder fixing structures 0150 (not shown in FIG. 8B)

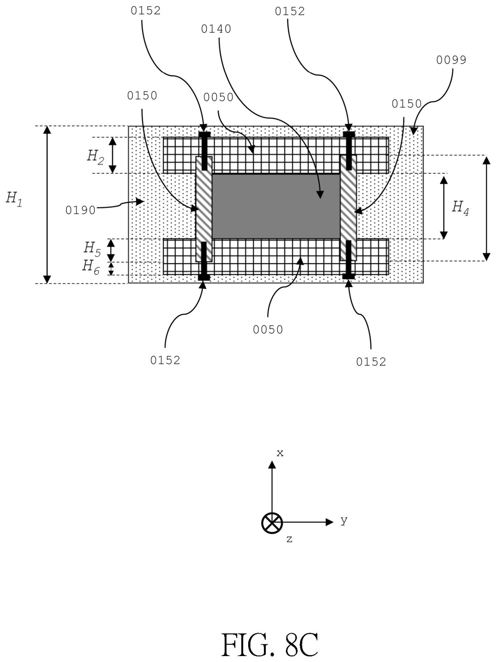

Referring to FIG. 8C, a section view along the dashed-line B-B' of the LLC 0080 depicted in FIG. 8B. As illustrated, the cell holder 0050 is stopped vertically by the cell-holder stopping structure 0140 and is fixed with the LLC 0080 by fastening the cell holder 0050 and the LLC 0080, by the fixing fasteners 0152.

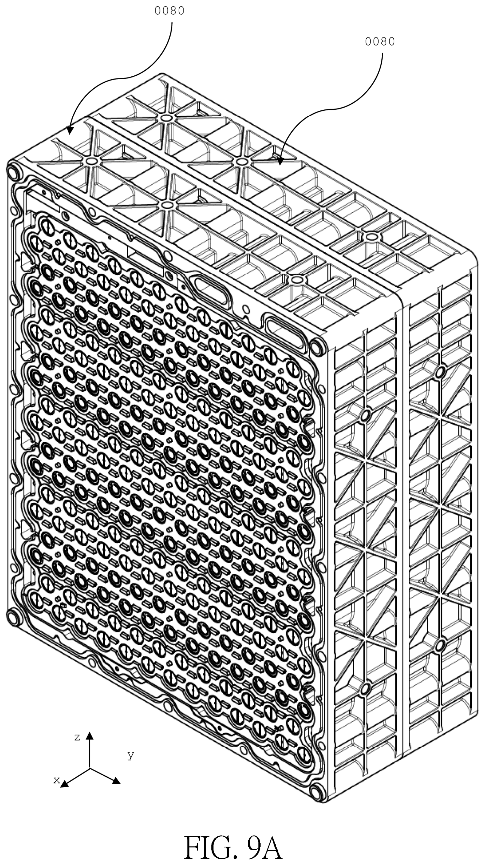

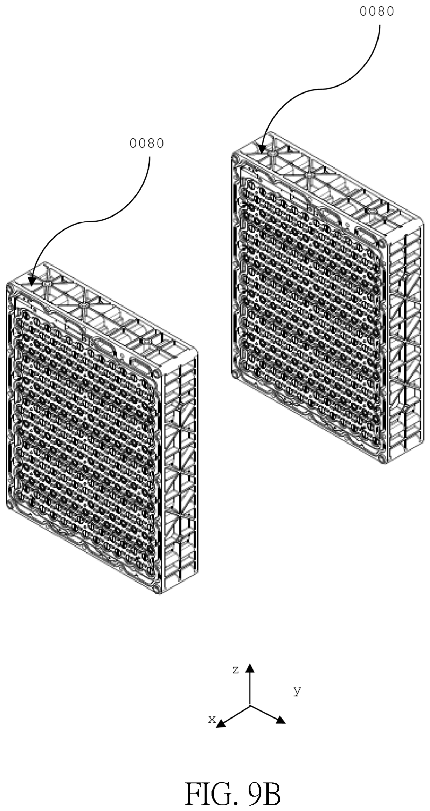

Referring to FIGS. 9A and 9B are perspective views of the stacking of two BCAs.

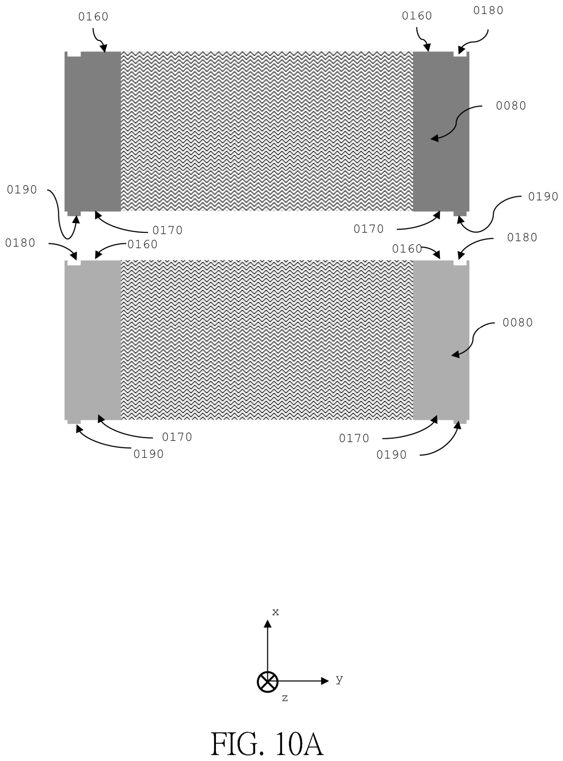

In some embodiments, as illustrated in FIG. 10A, LLC 0080 may comprise a top wall surface 0160 and a bottom wall surface 0170 that are surfaces , that extend along the lateral direction, of the vertical ends of the LLC 0080.

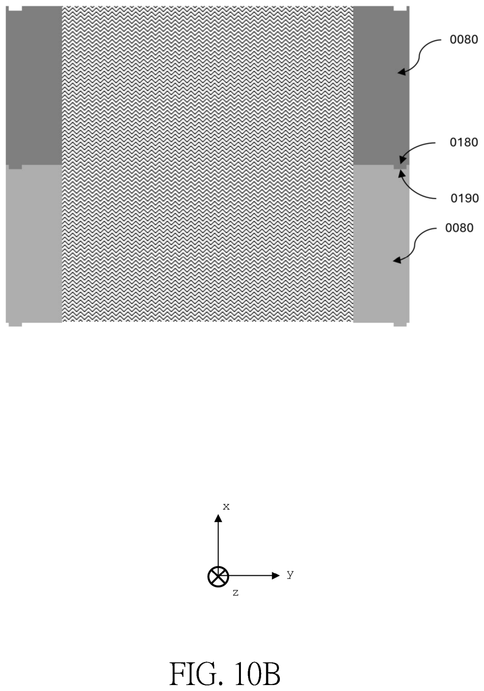

In some embodiments, the top wall surface 0160 and bottom wall surface 0170 may comprise complementary interlocking features configured to resist lateral shear when vertically stacked. For example, the top wall surface 0160 may comprise at least one top surface interlocking structures 0180, and the bottom wall surface 0170 may comprise at least one bottom surface interlocking structures 0190, as illustrated in FIG. 10A. The top surface interlocking structures 0180 and the bottom surface interlocking structures 0190 may be located at certain lateral positions so that when two LLCs 0080 are stacked vertically (as illustrated in FIG. 10B), the top surface interlocking structures 0180 and the bottom surface interlocking structures 0190 may combined and therefore provide lateral forces to limit the relative displacement between the two stacked LLCs 0080. For example, a pair of top surface interlocking structure 0180 and bottom surface interlocking structure 0190 may be a protrusion structure and a receiving structure.

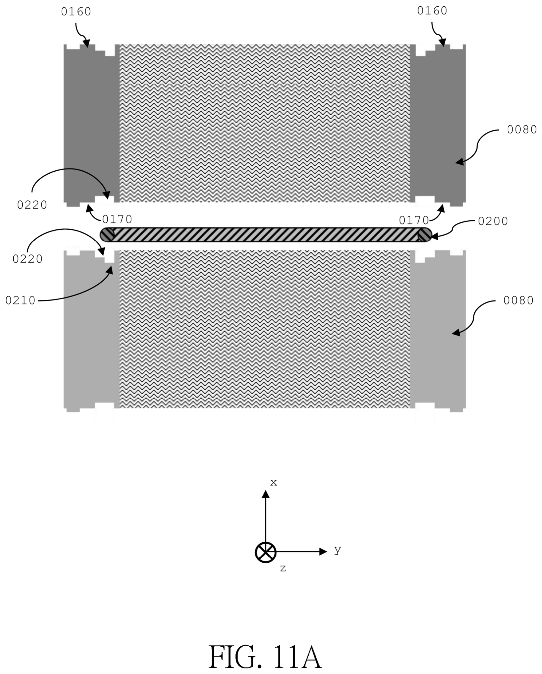

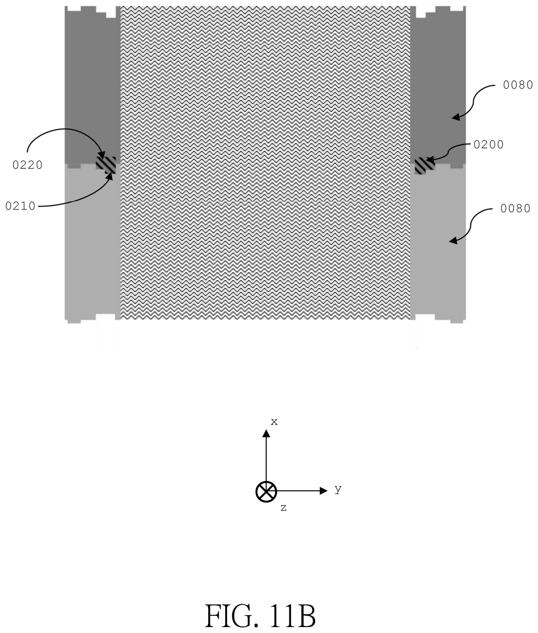

Referring to FIGS. 11A and 11B, in some embodiments, at least one of the top wall surface 0160, the bottom wall surface 0170 or both, may comprise at least one sealing-member-accommodating structure 0220, that is configured to provide a space to accommodate sealing members that is arranged at the interface of two LLCs 0080 to prevent liquid leaking from the interface of the two LLCS. For example, the sealing member 0200 may be an O-ring or adhesive materials. In some embodiments, the bottom wall surface 0170 or both, may further comprise at least one sealing-member-positioning structure 0210 that is configured for limiting the lateral movement of the sealing member 0200. For example, in FIGS. 11A and 11B, the sealing-member-positioning structure 0210 is a gap configured to provide the lateral force to limit the lateral movement of the sealing member 0200. As depicted in FIG. 11B, the sealing member 0200 may be filled with the space provided by the sealing-member-accommodating structure 0220 to provide the sealing effect.

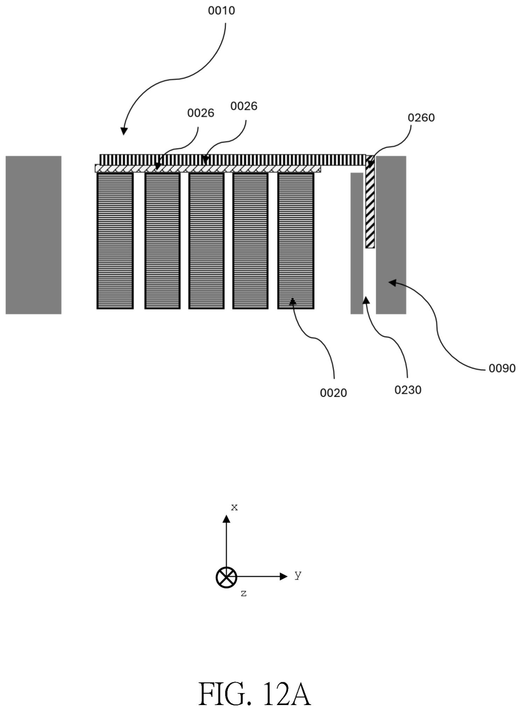

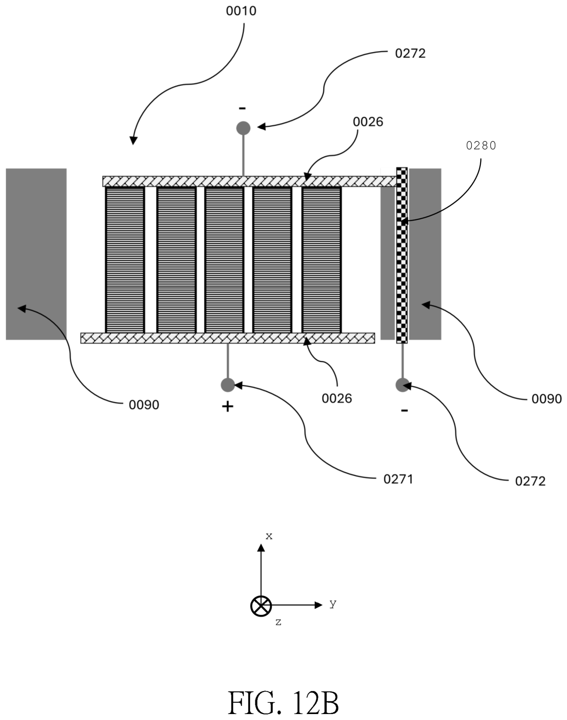

In some embodiments, the peripheral wall 0090 may comprise vertical-wall-channel 0230 that is a hollow space in the peripheral wall 0090. The vertical-wall-channel 0230 may be a through-hole that penetrates the peripheral wall 0090 vertically. The vertical-wall-channel 0230 may be used to accommodate a PCB of a cell monitoring device 0260, which is signally connected to the BCCM 0026 of the BCA 0010, as in FIG. 12A. The vertical-wall-channel 0230 may be used to accommodate a conductor rod 0280, which is used to make both of the positive electrode 0271 and negative electrode 0272 to be disposed at the same terminal of the BCA 0010, as in FIG. 12B.

As disclosed in the '417 application (i.e., Application No. 18/211,417), the vertical-wall-channel 0230 may be used to provide a vertical flow channel that allows the liquid flow vertically. For example, the vertical-wall-channel 0230 may refer to the "inlet channel" and "outlet channel" that is disclosed in the'417 application.

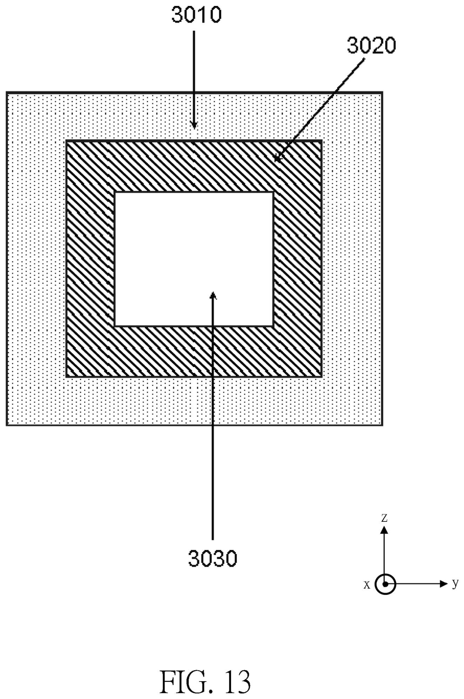

Referring to FIG. 13, FIG. 13 is a conceptual block diagram of an electric vehicle (hereafter, EV) 3010 that is designed with a cell-to-chassis (hereafter, CTC) integration type battery system (hereafter, BS) 3030. As illustrated, the EV 3010 may include a chassis 3020. The chassis 3020 may include a BS 3030. In the present disclosure, the BS 3030 may refers to one or more battery packs (hereafter, BPs) with other necessary systems that is related to the operation of the BPs; or in the case of the CTC integration, the BS may refers to cells integrated to the chassis 3020 of the chassis 3020 with other necessary systems that is related to the operation of the cells. For examples, the BS 3030 may include but not limited by one or more BPs, a battery management system (hereafter, BMS), a thermal management system (hereafter, TMS) and others. For the CTC example, the BS 3030 may have cells integrated to the chassis 3020, a battery management system, a thermal management system and others.

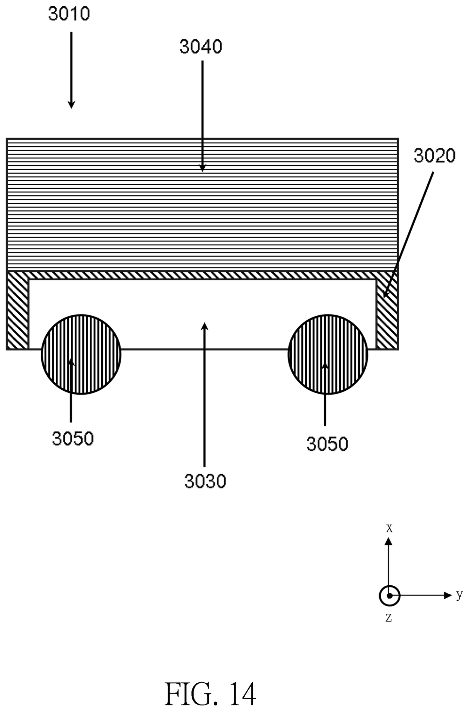

Referring to FIG. 14, FIG. 14 is a conceptual side view of an EV 3010 with a CTC integration type BS 3030. As illustrated, the EV 3010 may include a vehicle body 3040 and a chassis 3020. The chassis 3020 may be integrated with the vehicle body 3040, the BS 3030, transaction motors (not shown in the figure), transmission systems (not shown in the figure) and drive wheels 3050 (only two wheels 3050 shown in FIG. 14 since FIG. 14 is a side view of the EV 3010).

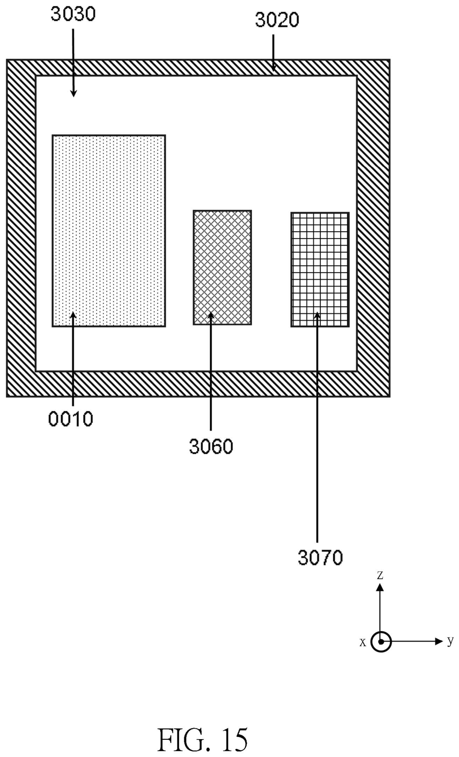

Referring to FIG. 15, FIG. 15 is a conceptual block diagram of a CTC integration type BS 3030. As illustrated, the chassis 3020 of the EV 3010 may include the BS 3030. The BS 3030 may include at least one BCA 0010 as mentioned in the above, a BMS 3060, and a TMS 3070. In the perspective of system integration, the chassis 3020 may include accommodation spaces to accommodate the at least one BCA 0010, BMS 3060, and the TMS 3070. For example, the chassis 3020 may include: a BCA-space to accommodate the at least one BCA 0010, a BMS-space to accommodate the BMS 3060, and a TMS-space to accommodate the TMS 3070. For example, the chassis 3020 may comprise structures that define those accommodation spaces.

In some cases, a BCA 0010 would be integrated with components to form a battery module (hereafter, BM). For example, in the present disclosure, the BM may be an assembly that is composed of a BCA 0010 and other components such as: an enclosure of the BCA 0010, heat-regulating components such as heat-dissipation-components, battery-management-components, and other components. The manufacturing of a BM is usually an intermediate step in the production of the whole system. That is, the BM is considered as an intermediate building block to form a higher integration-level energy storage system, while the BM is also integrated by a more fundamental building block - the BCs 0020 as mentioned in the above. Therefore, the BM may also comprise modular interfaces that are configured for integrate the BM to other BM, and/or to other modules of the underlying larger energy storage system. For example, the BM may comprise modular-electric-energy-interfaces (hereafter, MEEI), that is configured to provide electrical connection for the communication (to charge or to discharge) of the electrical energy that is stored in or released from the BM. The MEEI may be electrodes or connectors disposed on the BM. For example, the BM may comprise interfaces of the heat-regulating components such as a liquid connector for a thermal-controlling liquid to flow into and out of a BM to another liquid container or channel. For example, the BM may comprise interfaces for connecting mechanically to another BM and/or to other modules.

In the present disclosure, the phrase "battery pack" (hereafter, BP) refers to an independently manufactured and encapsulated energy storage system, designed to be integrated into an electrical equipment (such as EVs, battery energy storage system (hereafter, BESS), or others) that is to be powered by the electrical energy discharged from the BP. It is typically produced as a distinct product, often by an entity separate from the original equipment manufacturer (hereafter, OEM) of the electrical equipment. The BP is mechanically stable to ensure its integrity during shipping and integration processes, such as the assembling process of an EV. Additionally, a BP is equipped with standardized interfaces to facilitate electrical and mechanical integration with the larger system in which it is installed. In some embodiments, a BP may be integrated with a chassis by welding, adhesive bonding, or bolted connection. The spatial dimension of a BP is also designed with the consideration of available space of the underlying electrical equipment. In some cases, the BCs 0020 could be integrated to form a BP directly. For example, the BP may comprise structures that could be integrated with the BCs 0020 directly. Thus, there is no need to produce the BCA 0010 or the BM before the assembling for the BP. Such a concept is known as cell-to-pack (hereafter, CTP) integration.

In other cases, the BP is assembled by the integrations of multiple BMs. In some cases, electric equipment may comprise only one BP, such as passenger vehicles. In other cases, electric equipment may comprise multiple BPs.

In some cases, the BCs 0020 could be integrated into electrical equipment directly. For example, some passenger EVs are designed with a chassis 3020 that is able to be integrated with the BCs 0020 directly. Such a concept is known as CTC integration. The CTC integration provides simplified manufacturing processes for OEMs of the electrical equipment and reduces the cost.

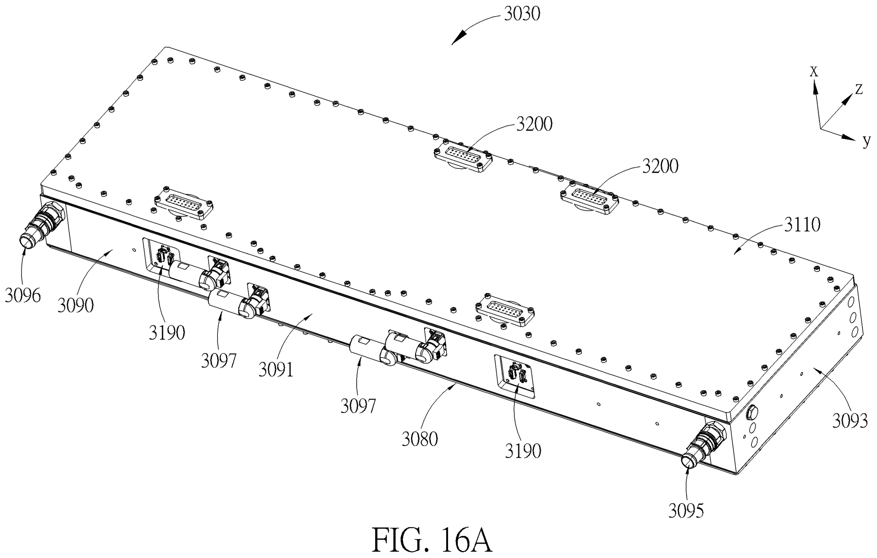

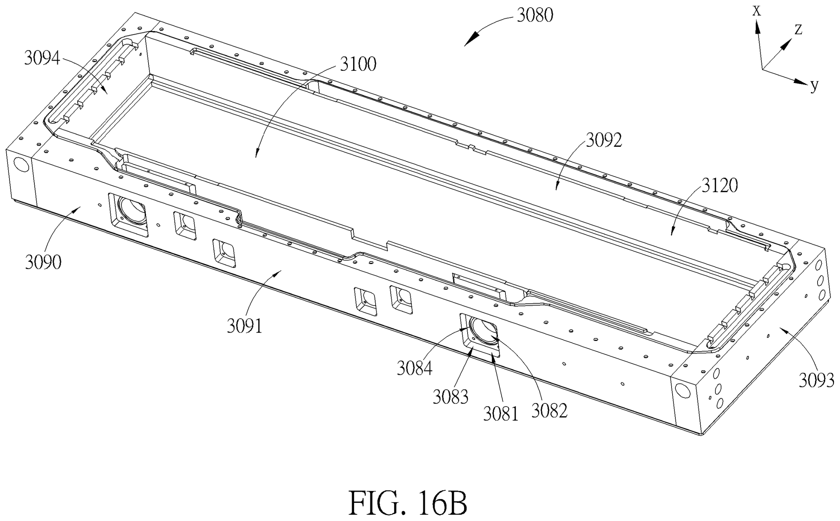

Referring to FIGS. 16A and 16B, FIG. 16A is a perspective view of the BS 3030 of this disclosure and FIG. 16B is a perspective view showing the inside of the BCA-enclosure 3080. In FIGS. 16A and 16B, the BCA-enclosure 3080 of the BS 3030 may comprise four side walls 3090 (including a front side wall 3091, a rear side wall 3092, a right side wall 3093, and a left side wall 3094), a bottom wall 3100 and a top wall 3110 that are combined to define a BCA-space 3120. Thus, the BCA-space 3120 is enclosed by the four side walls 3090, the bottom wall 3100 and the top wall 3110 of the BCA-enclosure 3080, and the top wall 3110 covers the BCA-space 3120.

In some embodiments, at least a part of the BCA-enclosure 3080 may be formed with the chassis 3020. For example, the BCA-enclosure 3080 may be formed with a casting process for producing the chassis 3020. In some embodiments, at least a part of the box-like BCA-enclosure 3080 may be formed in one piece with the chassis 3020. For example, the top wall 3110, the bottom wall 3100, or at least a side wall 3090 may be formed with the chassis 3020.

In some embodiments, the whole BCA-enclosure 3080 may be formed independently rather than being formed with the chassis 3020. Therefore, in such cases, the integration of the BCA-enclosure 3080 and the chassis 3020 is a distinct step to the manufacturing process of the chassis 3020. The independently formed BCA enclosure 3080, rather than being integrally formed with the chassis 3020, provides advantages in that the BPs can be independently produced and qualified, and can be more readily removed for replacement or repair.

In some embodiments, thermal management liquid is introduced into the BCA-enclosure 3080, such that the at least one BCA 0010 in the BCA-space 3120 is immersed in the thermal management liquid. In such cases, the side walls 3090, bottom wall 3100 and the top wall 3110 are integrated as a liquid-tight enclosure. The mechanical interfaces of these walls 3090, 3100, 3110 may comprise sealing structures, sealing components, or both the sealing structures and sealing components to prevent the leaking of the thermal management liquid from the BCA-space 3120. For example, the side walls 3090 of the BCA-enclosure 3080 may comprise the sealing member accommodating structure 0220 (as shown in FIGs. 11A and 11B) to receive an O-ring; or may comprise the sealing member positioning structure 0210 (as shown in FIGs. 11A and 11B) for limiting the movement of the O-ring.

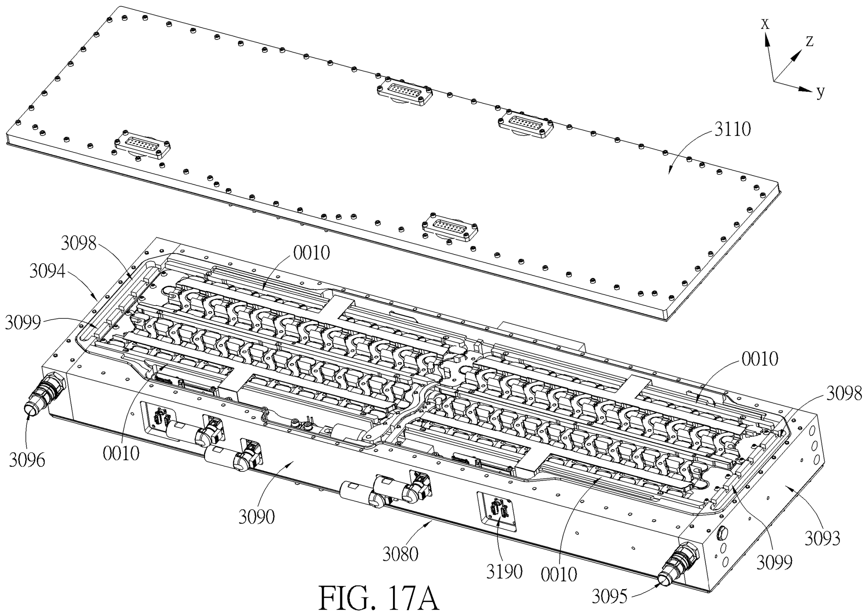

Referring to FIG. 17A, four BCAs 0010 are integrated into the BCA-space 3120 defined by the BCA-enclosure 3080. The top wall 3110 is configured to be integrated with the side walls 3090 so that the BCA-enclosure 3080 may be liquid tight for the immersion cooling.

In some embodiments, the BCA-enclosure 3080 may include a coolant inlet 3095 and a coolant outlet 3096 respectively installed on the right side wall 3093 and the left side wall 3094, wherein the coolant inlet 3095 and the coolant outlet 3096 are configured to be the interface of inputting and outputting the thermal management liquid to the TMS 3070. For example, the TMS 3070 may comprise a liquid tank, a pump, and a heat exchanger for the immersion cooling.

In some embodiments, each the right side wall 3093 and the left side wall 3094 may comprise an internal passage 3098. Each the internal passage 3098 may be a through-hole in the underlying right side wall 3093 and the left side wall 3094. The internal passage 3098 may function as a relay channel between the BCA-space 3120 and the inlet 3095 or outlet 3096. For example, the right side wall 3093 may comprise a first internal passage that is a through hole with a first end that fluidically connected to the inlet 3095 and a second end that fluidically connected to the BCA-space 3120; the left side wall 3094 may comprise a second internal passage that is a through hole with a first end that fluidically connected to the outlet 3096 and a second end that fluidically connected to the BCA-space 3120.

In some embodiments, each the right side wall 3093 and the left side wall 3094 may comprise at least one passage interface structure 3099 that is configured as a fluidical interface between the internal passage 3098 and the BCA-space 3120. For example, as the FIG. 17A depicted, the passage interface structure may comprise multiple vertical protrusions 3099 extended from the inner side of the underlying right-side wall 3093 or the left side wall 3094. The space between two adjacent vertical protrusions 3099 may function as a fluid channel for the fluid to flow between the internal passage 3098 and the BCA-space 3120. In some embodiments, the BCA 0010 may comprise cell monitoring circuits 3061, temperature sensors, and voltage sensors to facilitate battery management functions. These circuits may be signally connected to the BMS 3060 through a signal communication interface that is attached on the BCA-enclosure 3080. For example, as FIG. 16B depicted, the BCA-enclosure 3080 may comprise a signal opening structure 3081 to provide a space to set a signal interface. For example, as the FIG. 16A depicted, the BS 3030 may comprise a signal interface circuit board 3190 that is attached to, covered with and sealed with the signal opening structure.

In some embodiments, the signal opening structure 3081 may be a through hole extended from the inner-surface (the surface near the BCA-space 3120) of the side wall 3090, to the outer-surface of the side wall 3090, such a through hole provides a channel to accommodate the signal communication interface. The through hole may further comprise a cylindrical-channel structure 3082 and/or a square-channel structure 3083. The cylindrical-channel structure 3082 may provide a trough-hole extended from the inner surface of the side wall 3090 to a middle section in the side wall 3090, such a through-hole has a round-edged-inner opening facing the BCA-space 3120, and a round-edged outer-opening facing the external space of the BCA-enclosure 3080. These round-edged openings are suitable for O-ring fitting and have a better sealing effect. For example, an O-ring receiving gap 3084 may be set on the round-edged-outer opening. The square-channel structure 3083 may provide a trough-hole extended from the middle section in the side wall 3090 to the outer surface of the BCA-enclosure 3080. The square shape is suitable to accommodate PCB boards of the signal interface circuit board 3190. The signal interface circuit board 3190 may comprise an O-ring receiving gap that is used to be sealed with the BCA-enclosure 3080 by an O-ring.

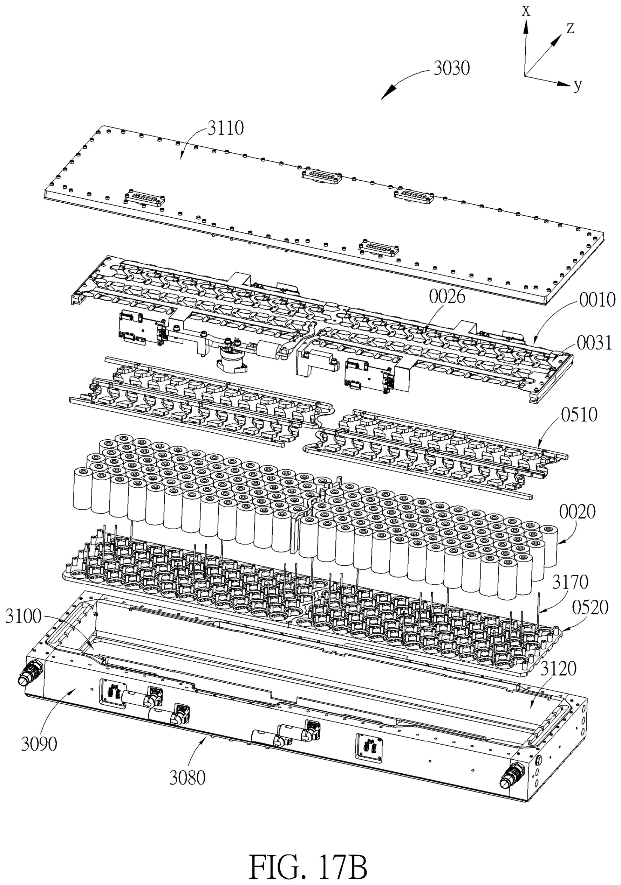

Referring to FIG. 17B, which is an explosive diagram of the BS 3030. As illustrated, the BCA 0010 may comprise a plurality of BCs 0020, a top cell holder 0510, a bottom cell holder 0520, at least one BCCM 0026, at least one battery-cell-assembly-electrode (hereafter, BCAE) 0031, and interstitial material (not shown).

In some embodiments, the bottom cell holder 0520 may be attached firmly to the surface of the bottom wall 3100 of the BCA-enclosure 3080. The bottom cell holder 0520 may comprise receiving structures that provide lateral and vertical forces to hold the BCs 0020. For example, the receiving structure may comprise receiving hole extended in the vertical direction. For another example, the receiving structure may comprise vertical extended wall or pillar shaped structure that can guide the insertion of the BCs 0020 while assembling.

In some embodiments, the BCs 0020 may be fixed in the receiving structures of the bottom cell holder 0520. In some embodiments, for the purposes of fixing the BCs 0020, interstitial material (not shown) may be used to provide adhesive force. The interstitial material may be any insulation material that may be cured from a liquid state to a solid state. For example, the interstitial material may be resin such as epoxy or Arylic.

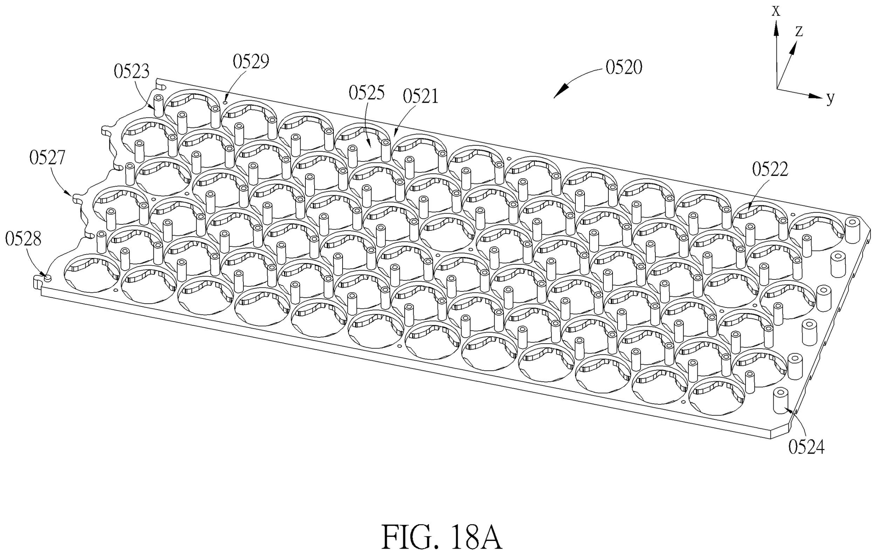

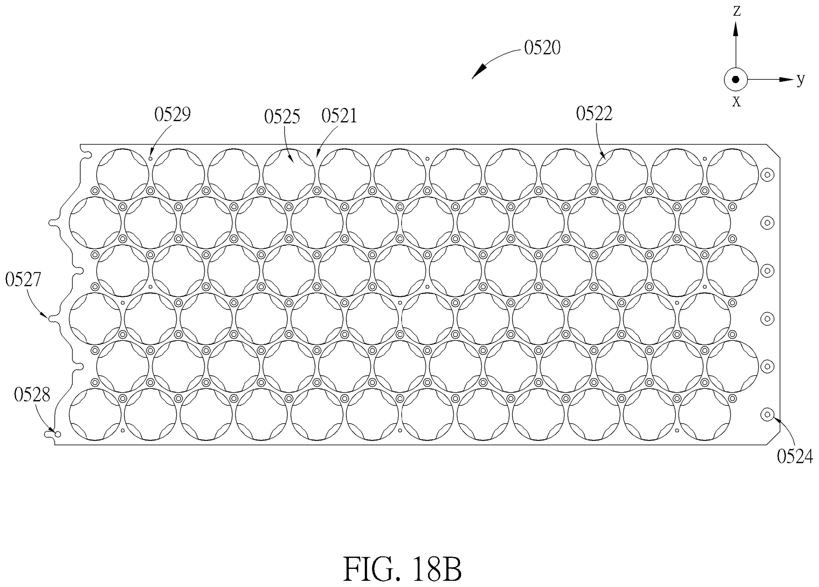

Referring to FIGS. 18A to 18C, the bottom cell holder 0520 may be a rectangular plate and include a layer of lateral stopping structure 0521, a layer of vertical stopping structure 0522, a plurality of venting structures 0523, and a plurality of vertical fluid channel structures 0524. The lateral stopping structure 0521 is planar structure with receiving holes 0525. The receiving holes 0525 penetrate the upper and lower surfaces of the bottom cell holder 0520 and are configured to receive the BCs 0020. The inner side walls of the receiving holes 0525 limit the lateral movement of the BCs 0020. The vertical stopping structure 0522 is attached at the bottom of the lateral stopping structure 0521 and configured for supporting the weight of the BCs 0020. The vertical stopping structure 0522 may protrude inward in the radial direction of the receiving hole 0525 to support the BCs 0020, such that the vertical stopping structure 0052 limits the downward vertical movement of the BCs 0020. Thus, the BCs 0020 can be positioned on the bottom cell holder 0520 by the lateral stopping structure 0521 and the vertical stopping structure 0522. The horizontal projection area of the vertical stopping structure 0522 is smaller than the horizontal projection area of the bottom cell holder 0520.

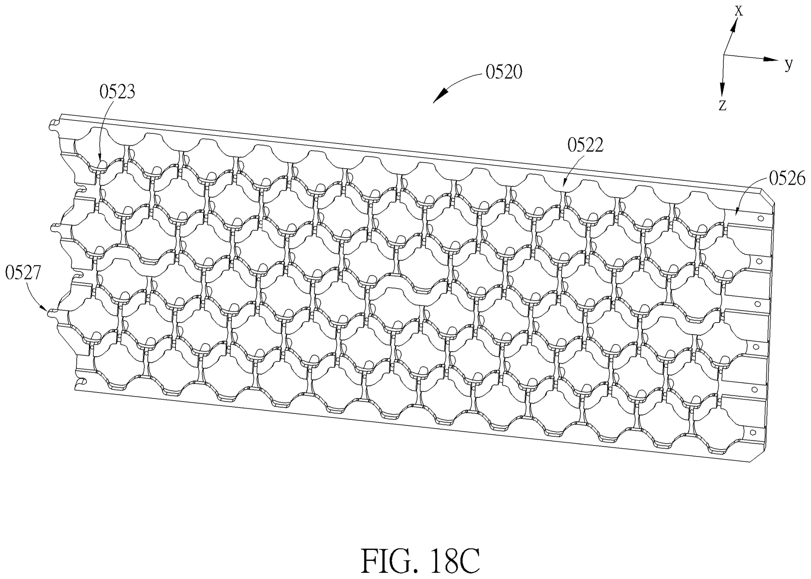

Referring to FIG. 18C, which shows the bottom of the bottom cell holder 0520. The vertical stopping structures 0522 are formed with discrete islands. In this embodiment, the vertical stopping structures 0522 may have multiple lateral channels 0526, which divide the vertical stopping structures 0522 into discrete islands. Between those discrete islands, the channels 0526 distributed laterally are formed to allow liquid or gas released from the bottom of the BCs 0020 to pass. These lateral channels 0526 are fluidically connected to the venting structures 0523 or the vertical fluid channel structures 0524.

Referring to FIGS. 18A to 18C, the venting structures 0523 and the vertical fluid channel structures 0524 are tubing structure extended upward from the lateral stopping structure 0521. The venting structures 0523 are located above the lateral channels 0526 of the vertical stopping structures 0522. These tubing structures may include through holes that extended from the very lower end of the lateral stopping structure 0521 to the very top end of the tubing structures, thereby allowing the gas or liquid flow vertically through the through holes.

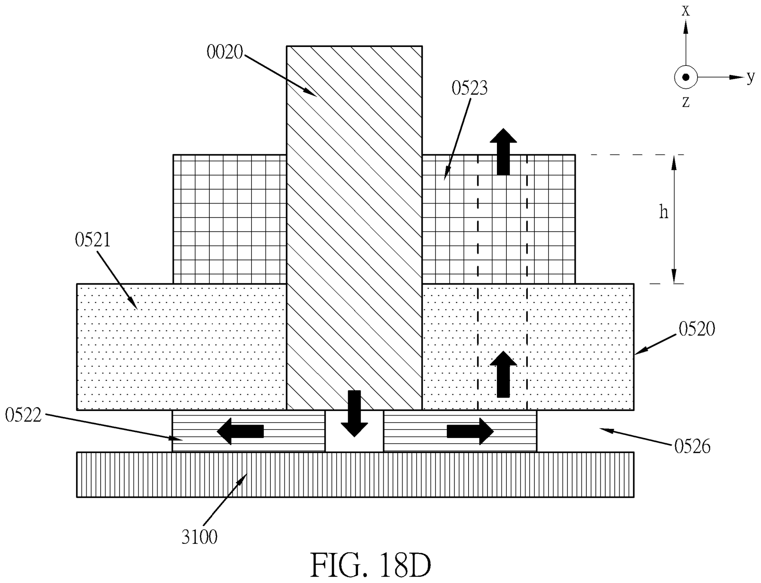

Referring to FIG. 18D, the lateral channels 0526 form the gaps between the bottom cell holder 0520 and the bottom wall 3100. For example, when a thermal event causes the BC 0020 to release gas from its bottom, gas may pass the lateral channel 0526 between the discrete islands of the vertical stopping structures 0522, and then may enter the through hole of the venting structure 0523 and move vertically towards the top end of the venting structure 0523 (the arrows shown in FIG. 6D represent the movement of the gas). Thus, the BC 0020 will not expand due to the gas, thereby ensuring the safety operation of the BC 0020. In some embodiments, the thickness of the interstitial material (not shown in FIG. 18D) may not be larger than the height h of the venting structure 0523 above the lateral stopping structure 0521, so that the interstitial material would not fill into the through hole of the venting structure 0523.

In some embodiments, the bottom cell holder 0520 may have a connecting structure 0527 for connecting to other bottom cell holders 0520. The connecting structure 0527 may be an engaging structure with concave and convex joints. The connecting structure 0527 and the vertical fluid channel structures 0524 may be located at opposite sides of the bottom cell holder 0520.

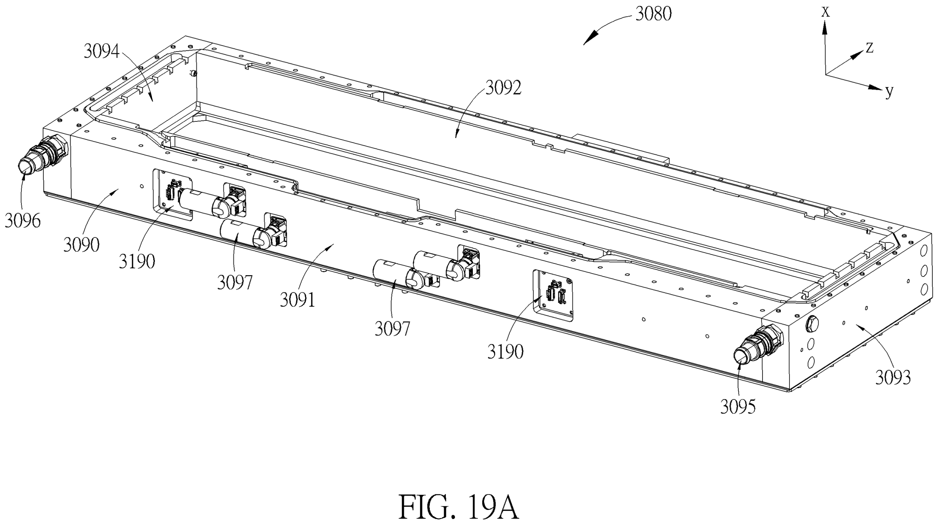

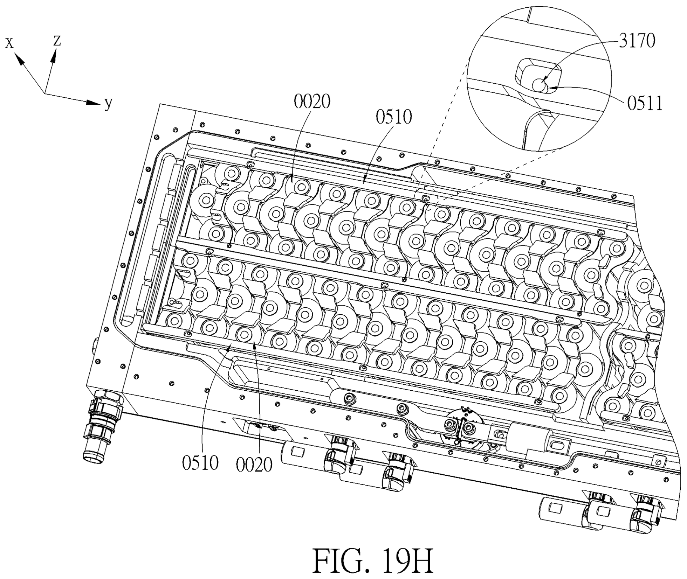

Referring to FIGs. 19A to 19L, FIGs. 19A to 19L show the assembling process of the BS 3030. When assembling the BCA-enclosure 3080, the side walls 3090 are assembled first. As shown in FIG. 19A, high-voltage connectors 3097 and signal interface circuit boards 3190 are installed on the front side wall 3091, and the gaps between the high-voltage connectors 3097 and the front side wall 3091 are sealed with structural adhesive (e.g. DP100). Then, the front side wall 3091, the rear side wall 3092, the right side wall 3093, and the left side wall 3094 are assembled and the joints thereof are sealed with structural adhesive to form the BCA-enclosure 3080. Furthermore, a coolant inlet 3095 and a coolant outlet 3096 may be respectively installed on the right side wall 3093 and the left side wall 3094, such that the thermal management liquid can flow into the BCA-enclosure 3080 through the coolant inlet 3095 and flow out of the BCA-enclosure 3080 through the coolant outlet 3096.

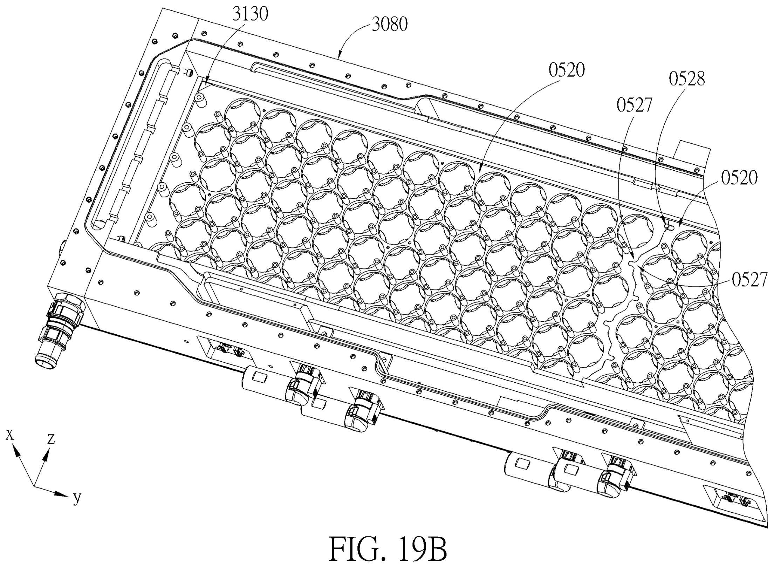

Then, the components of the BCA 0010 are sequentially installed into the BCA-enclosure 3080. As shown in FIG. 19B, two bottom cell holders 0520 may be connected with each other by the connecting structures 0527. Before placing the two bottom cell holders 0520 into the BCA-enclosure 3080, four positioning members 3130 are placed for the two bottom cell holders 0520 at four corners of the bottom of the BCA-enclosure 3080. It should be noted that there is only one positioning member 3130 shown in FIG. 19B due to the viewing angle. Two of four corners of each bottom cell holder 0520 may be designed as planar corners to accommodate the positioning members 3130. Thus, after placing the two bottom cell holders 0520 into the BCA-enclosure 3080, the corners of each bottom cell holder 0520 abut against the corresponding positioning members 3130, so as to position the two bottom cell holders 0520 on the bottom wall 3100 of the BCA-enclosure 3080.

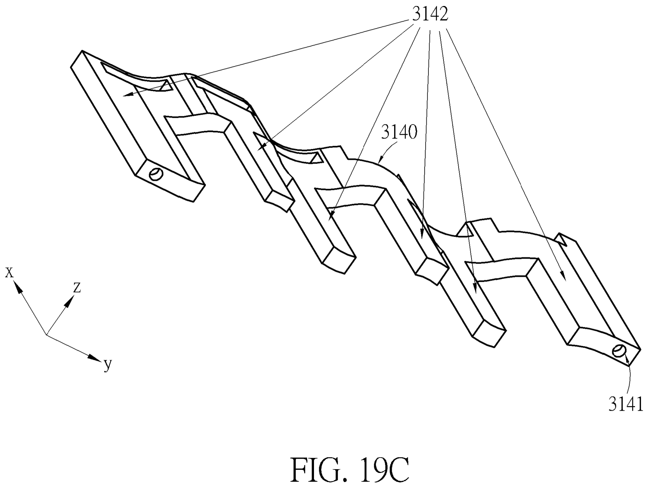

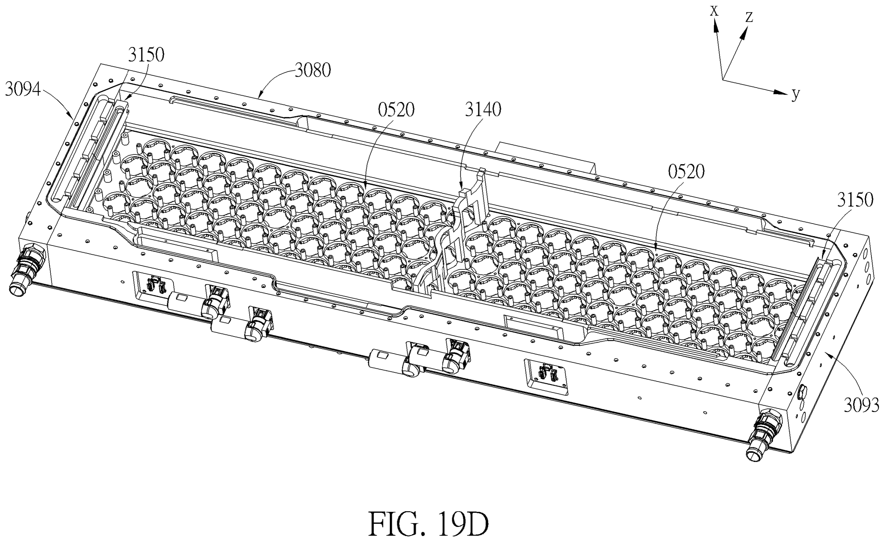

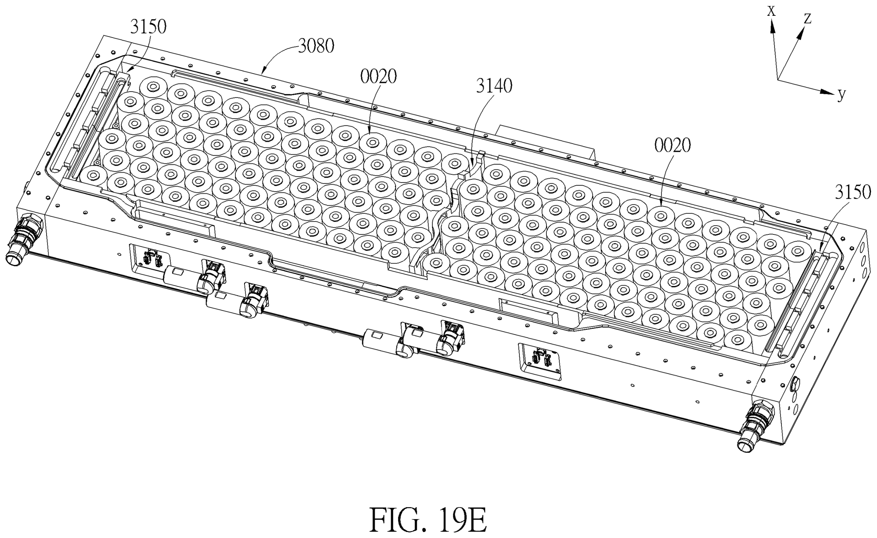

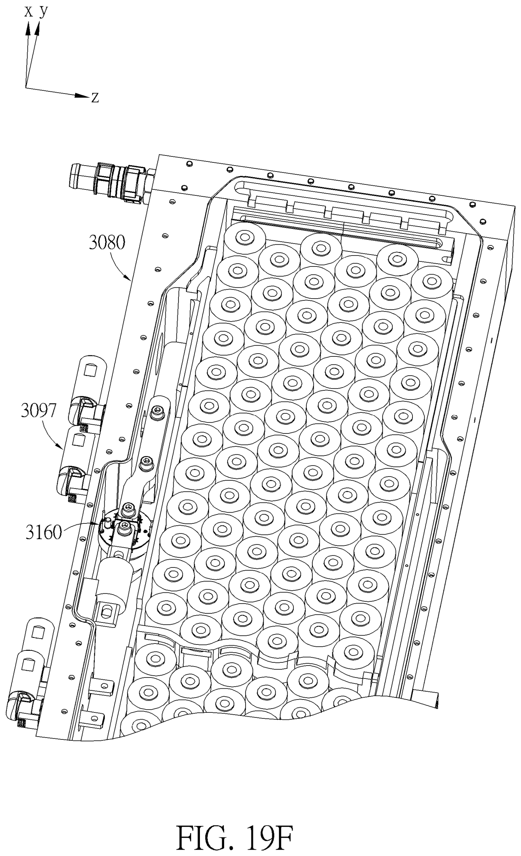

Then, a holder connecting member 3140 is assembled to the bottom cell holder 0520. The holder connecting member 3140 may function as a supporting chassis to provide vertical supporting forces to carry components placed on the top of the holder connecting member 3140. The holder connecting member 3140 may also function as a partition between the BCAs 0010, for example, the holder connecting member 3140 may be an insulator to provide electrical barrier between the multiple BCAs 0010 in the BCA-space 3080. The holder connecting member 3140 may comprise a plurality of fence structures 3142 that configured as a lateral channel for the fluid to pass by the spacing between the fence structures 3140. As shown in FIGS. 19B and 19C, the bottom cell holder 0520 may have a protrusion 0528 and the holder connecting member 3140 may have a positioning hole 3141. The protrusion 0528 is inserted into the positioning hole 3141 to position the holder connecting member 3140 on the bottom cell holder 0520. Then, two barriers 3150 are respectively assembled to the right side wall 3093 and the left side wall 3094, as shown in FIG. 19D. The two barriers 3150 are made of an insulating material and are fixed to the inner wall surfaces 0101 of the right side wall 3093 and the left side wall 3094, respectively, to provide vertical support. Then, the BCs 0020 are assembled to the bottom cell holder 0520 within the BCA-enclosure 3080, as shown in FIG. 19E. As mentioned in the above, the BCs 0020 are received in the receiving holes 0525 of the lateral stopping structure 0521 and supported by the vertical stopping structure 0522, such that the inner side walls of the receiving holes 0525 limit the lateral movement of the BCs 0020, and the vertical stopping structure 0052 limits the downward vertical movement of the BCs 0020. It should be noted that, before the BCs 0020 are assembled to the bottom cell holder 0520, thermal couple is adhered to the bottom of the BC 0020. Then, a part of the high-voltage connector 3097 inside the BCA-enclosure 3080 is connected to a contactor 3160 within the BCA-enclosure 3080, as shown in FIG. 19F.

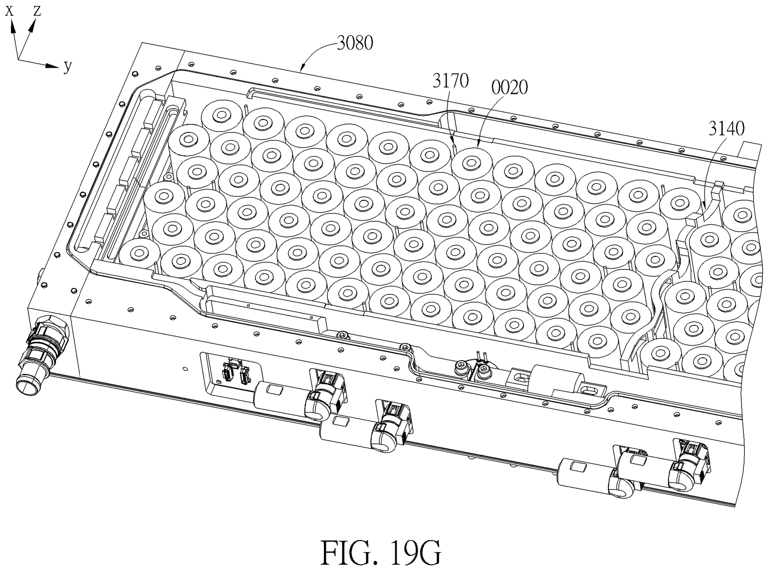

Then, a plurality of connecting rods 3170 are assembled to a plurality of insertion holes 0529 (as shown in FIG. 18A) of the bottom cell holder 0520, as shown in FIGS. 17B and 19G. After the connecting rods 3170 are assembled to the bottom cell holder 0520, the connecting rods 3170 are located between the BCs 0020 and protrude from above the BCs 0020. Then, four top cell holders 0510 are assembled to the connecting rods 3170 and above the BCs 0020. In this embodiment, each of the top cell holders 0510 has a plurality of assembly holes 0511, such that the connecting rods 3170 can be inserted into the assembly holes 0511 to position the top cell holders 0510 above the BCs 0020, as shown in 19H. Then, the interstitial material mentioned in the above is filled into the BCA-enclosure 3080 to fix the BCs. As shown in FIG. 18D, the thickness of the interstitial material (not shown in FIG. 18D) may not be larger than the height h of the venting structure 0523 above the lateral stopping structure 0521, so that the interstitial material would not fill into the through hole of the venting structure 0523.

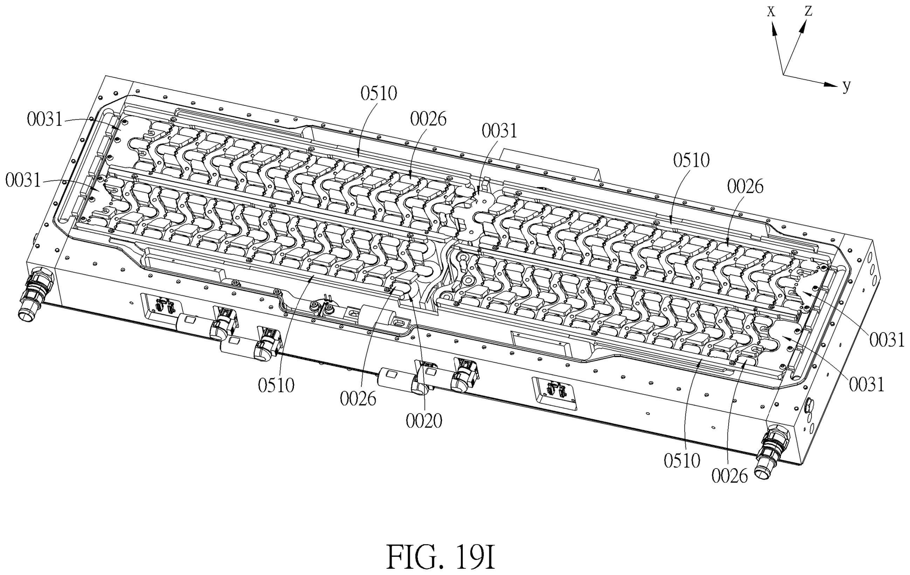

Then, as shown in FIG. 19I, a plurality of BCCMs 0026 are disposed on the four top cell holders 0510 and assembled to the BCs 0020, wherein every three BCs 0020 are connected in parallel by one BCCM 0026. In this embodiment, the positive electrode and the negative electrode are disposed at the same end of each BC 0020. Each BCCM 0026 comprises a first conductive part and three second conductive part arranged on one side of the first conductive part. Each of the second conductive parts is electrically coupled to the first conductive part via a corresponding neck portion. The first conductive part of each BCCM 0026 is in contact with the negative electrodes of BCs 0020. The second conductive part of each BCCM 0026 is in contact with the positive electrode of the adjacent BC 0020. The BCCM 0026 electrically connects a plurality of BCs 0020 in parallel as a plurality of in-parallel connected groups of BCs 0020, and connects the plurality of those in-parallel connected groups of BCs 0020 in series with at least one adjacent BC 0020. The design of the BCCM 0026 enables reduction of the manufacturing steps for assembling the BCs 0020 into the BCAs 0010.

For example, the first conductive part of each BCCM 0026 is in contact with the negative electrodes of three BCs 0020, and the second conductive part of each BCCM 0026 is in contact with the positive electrodes of the adjacent three BCs, thereby electrically connecting every three BCs 0020 in parallel, and connecting the groups of three BCs 0020 in series with each other. In this embodiment, the BCs 0020 are electrically connected by the BCCMs 0026 to form four BCAs 0010 electrically connected in series.

Furthermore, four BCAEs 0031 are respectively disposed on the barrier 3150 and assembled to the right side wall 3093 and the left side wall 3094 to electrically connect the two set BCAs 0010, each set including two BCAs 0010, in series. A fifth BCAE 0031 electrically connect between BCAs 0010 of each set, so as to form the BS 3030. During the assembly of the BCAEs 0031, the barrier 3150 can provide vertical support to the BCAEs 0031 and prevent short circuit contact.

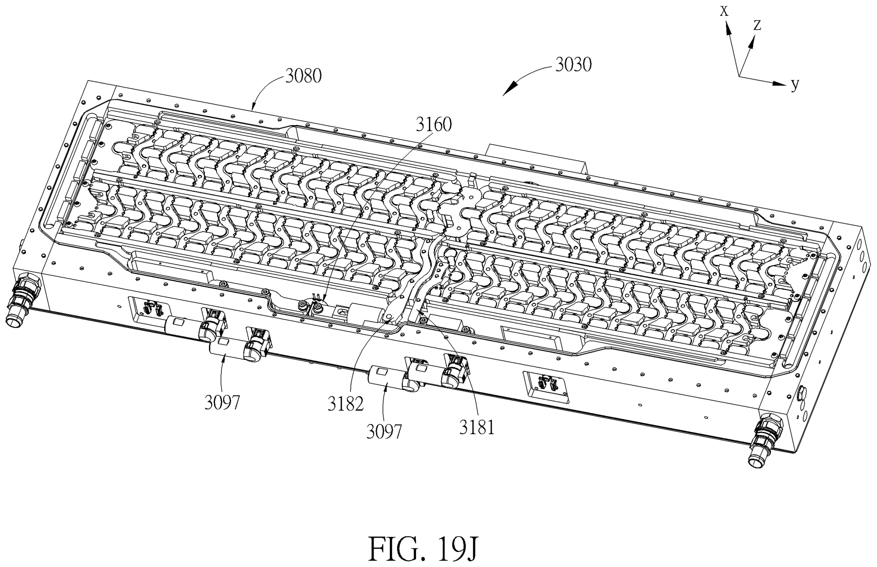

Then, as shown in FIG. 19J, two busbars 3181, 3182 are sequentially installed into the BCA-enclosure 3080, so as to provide the high-voltage electrical connection from the inside (i.e. BCA) to the outside of the BP. Two busbars 3181, 3182 are installed along a side of a BCA, which side is also adjacent to another BCA, thereby achieving a reduction in the overall volume of the BP or a simplified layout in the BP. For example, each of the busbars 3181 and 3182 may have one end contacting the BCCM 0026 of the BCA 0010 and another end connecting the contactor 3160. The two busbars 3181, 3182 may be high-voltage busbars. In this embodiment, the busbar 3181 may be connected to the high-voltage connector 3097 at the right side of FIG. 19J and the BCCM 0026 of the BCA 0010 and, the busbar 3182 may be connected to the contactor 3160 and another BCCM 0026 of the BCA 0010.

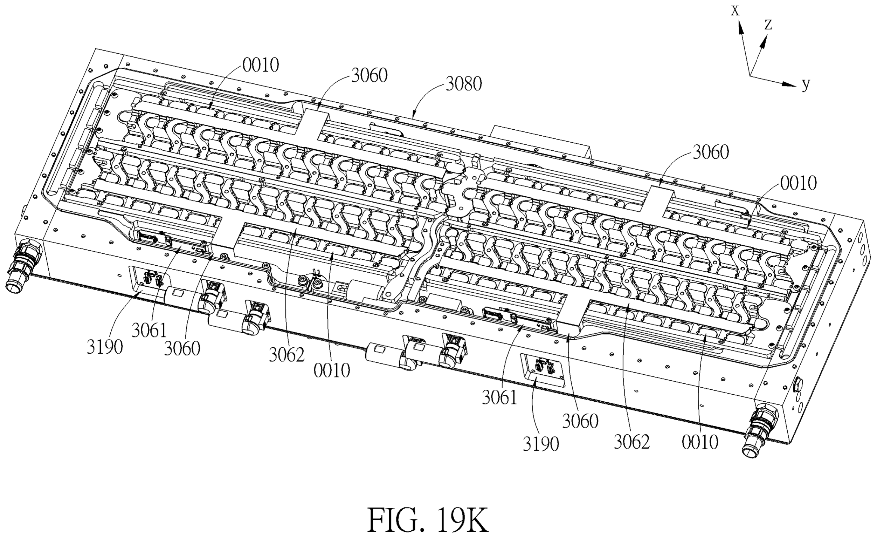

Then, the components related to the BMS 3060 are installed into the BCA-enclosure 3080, so as to provide the signal connection from the inside (i.e. BCA) to the outside of the BP. As shown in FIG. 19K, the BMS 3060 may comprise four cell monitoring circuits (hereafter, CMCs) 3061 and four flexible printed circuit boards (hereafter FPCs) 3062. The four FPCs 3062 are respectively assembled to the four BCAs 0010 and the four CMCs 3061 are respectively assembled to the four FPCs 3062. Then, two external connecting interfaces, for example the signal interface circuit boards 3190, of the CMCs 3061 are assembled to the BCA-enclosure 3080. The external connecting interface (e.g. the signal interface circuit board 3190) is configured to connect a low-voltage connector (not shown) of a downstream signal circuit, such as a battery monitoring unit (BMU) of a system, or controller area network (CAN) bus or electronic control unit (ECU) of a vehicle. Then, the circuit layout of a temperature sensor (not shown) is installed. In this embodiment, one BCA 0010 is monitored by one CMC 3061. The CMC 3061 is configured to monitor the voltage and temperature of the BCs 0020 of the BCA 0010.

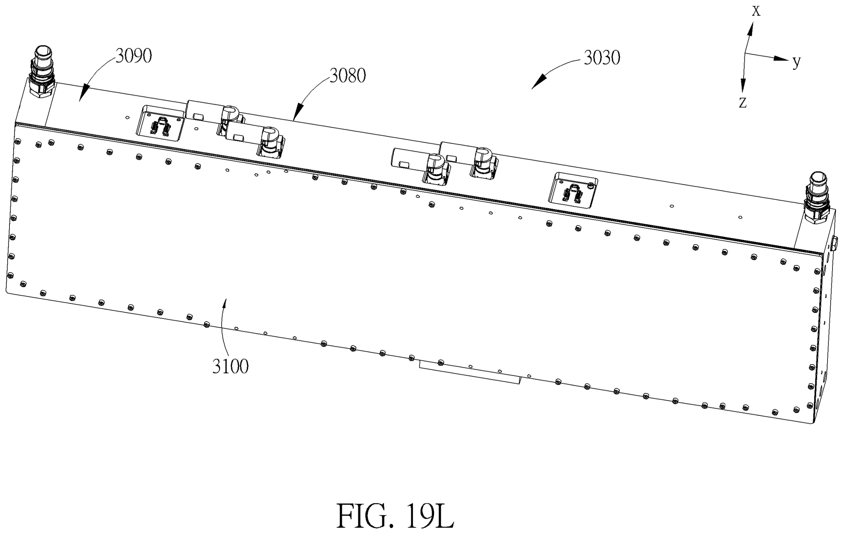

Then, the bottom wall 3100 is installed on the bottom of the BCA-enclosure 3080, as shown in FIG. 19L. In this embodiment, a sealing ring (e.g. O-ring) may be disposed between the bottom wall 3100 and the side wall 3090 to prevent the thermal management liquid from leaking. The bottom wall 3100 may be fixed to the bottom of the BCA-enclosure 3080 by a plurality of screws or the like.

Then, the top wall 3110 is installed on the top of the BCA-enclosure 3080 and a plurality of signal outlets 3200 are installed on the top wall 3110, as shown in FIG. 16A. In this embodiment, a sealing ring (e.g. O-ring) may be disposed between the top wall 3110 and the side wall 3090 to prevent the thermal management liquid from leaking. The top wall 3110 may be fixed to the top of the BCA-enclosure 3080 by a plurality of screws or the like. Accordingly, the assembly of the BS 3030 is completed.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A battery pack **characterized by** the battery pack comprising:
at least one battery cell assembly (BCA) (0010) comprising:
a plurality of battery cells (BCs) (0020);
at least one cell holder (0510, 0520) configured to limit the position of the battery cells (0020); and
at least one battery-cell-connecting member (BCCM) (0026) that is an electrical conductor configured to connect to electrodes of the battery cells (0020);
a liquid-tight enclosure (3080) configured to limit movement of a thermal-management liquid, comprising:
a front side wall (3091), a left side wall (3094), a right side wall (3093), a rear side wall (3092), a bottom wall (3100) and a top wall (3110) that are integrated as the liquid-tight enclosure (3080), and combined to define a space (3120) for accommodating the battery cells (0020), the at least one cell holder (0510, 0520), the at least one BCCM (0026) and the thermal-management liquid;
a coolant inlet (3095) and a coolant outlet (3096) respectively installed on the right side wall (3093) and the left side wall (3094), wherein the coolant inlet (3095) and the coolant outlet (3096) are configured to be the interface of inputting and outputting the thermal management liquid;
at least one high-voltage connector (3097) installed on the front side wall (3091) for electrically connect to an electrical equipment; and
at least one busbar (3181, 3182) being connected to the high-voltage connector (3097) and the BCCM (0026), so as to provide the high-voltage electrical connection between the BCA (0010) and the electrical equipment; and
wherein the enclosure (3080) is configured to be welded, adhesive bound, or bolted connected with the electrical equipment; and
a battery management system (3060) comprising at least one cell monitoring circuit (CMC) (3061); and
wherein one BCA (0010) is monitored by one CMC (3061); and
wherein an external connecting interface (3190) of the CMC (3061) is assembled to the enclosure (3080), which the external connecting interface (3190) is configured to connect a low-voltage connector of a downstream signal circuit.

2. The battery pack of claim 1 further **characterized in that**:
the enclosure (3080) comprises a signal opening structure (3081); and
wherein the signal opening structure (3081) is a through hole extended from the inner-surface of the front side wall (3091), to the outer-surface of the front side wall (3091), such a through hole provides a channel to accommodate the signal communication interface.

3. The battery pack of claim 2 further **characterized in that**:
the through hole comprises a cylindrical-channel structure (3082) and a square-channel structure (3083); and
wherein the cylindrical-channel structure (3082) provides a trough-hole extended from the inner surface of the side wall (3090) to a middle section in the front side wall (3091), such a through-hole has a round-edged-inner opening facing the BCA-space (3120), and a round-edged outer-opening facing the external space of the enclosure (3080).

4. The battery pack of claim 1 further **characterized in that**:
the battery pack comprises a holder connecting member (3140); and
the cell holder comprises a bottom cell holder (0520); and
wherein the bottom cell holder (0520) is attached to a surface of the bottom wall (3100);
wherein the bottom cell holder (0520) has a protrusion (0528), the holder connecting member (3140) has a positioning hole (3141), the protrusion (0528) is inserted into the positioning hole (3141) to position the holder connecting member (3140) on the bottom cell holder (0520).

5. The battery pack of claim 4 further **characterized in that**:
the holder connecting member (3140) comprises a plurality of fence structures (3142) that define a lateral channel for fluid to pass by spacing between the fence structures (3142).

6. The battery pack of claim 1 further **characterized in that**:
the cell holder comprises a bottom cell holder (0520); and
wherein the bottom cell holder (0520) is attached to a surface of the bottom wall (3100), the bottom cell holder (0520) comprises receiving structures that provide lateral and vertical forces to hold the battery cells (0020), the bottom cell holder (0520) comprising:
a layer of lateral stopping structure (0521), the lateral stopping structure (0521) being planar structure with receiving holes (0525), the receiving holes (0525) penetrating upper and lower surfaces of the bottom cell holder (0520) and being configured to receive the battery cells (0020);
a layer of vertical stopping structure (0522) attached at bottom of the lateral stopping structure (0521) and configured for supporting weight of the battery cells (0020), the vertical stopping structure (0522) having multiple lateral channels (0526), which divide the vertical stopping structure (0522) into discrete islands, wherein between those discrete islands, the lateral channels (0526) forming gaps between the bottom cell holder (0520) and the bottom wall (3100), the lateral channels (0526) distributed laterally being formed to allow liquid or gas released from bottom of the battery cells (0020) to pass; and
a plurality of venting structures (0523) located above the lateral channels (0526) of the vertical stopping structure (0522), comprising through holes that extended from very lower end of the lateral stopping structure (0521) to very top end of the venting structures (0523), thereby allowing gas or liquid flow vertically through the through holes, the lateral channels (0526) being fluidically connected to the venting structures (0523) or the vertical fluid channel structures (0524);
wherein, when a thermal event causes the battery cell (0020) to release gas from its bottom, the gas passes the lateral channels (0526) between the discrete islands and then enters the through hole of the venting structure (0523) and move vertically towards top end of the venting structure (0523).

7. The battery pack of claim 6 further **characterized in that**:
the bottom cell holder (0520) further comprises a connecting structure (0527) and a plurality of vertical fluid channel structures (0524) located at opposite sides of the bottom cell holder (0520); and
wherein the lateral channels (0526) are fluidically connected to the vertical fluid channel structures (0524); and
wherein the bottom cell holder (0520) has the connecting structure (0527) for connecting to other bottom cell holders (0520).

8. The battery pack of claim 6 further **characterized in that**:
a horizontal projection area of the vertical stopping structure (0522) is smaller than a horizontal projection area of the bottom cell holder (0520).

9. The battery pack of claim 1 further **characterized in that**:
the BCCM (0026) electrically connects a plurality of BCs (0020) in parallel as a plurality of in-parallel connected groups of BCs (0020), and connects the plurality of those in-parallel connected groups of BCs (0020) in series with at least one adjacent BC (0020).

10. The battery pack of claim 1 further **characterized in that**:
the right side wall (3093) comprises a first internal passage (3098) that is a through hole with a first end that fluidically connected to the coolant inlet (3095)and a second end that fluidically connected to the BCA-space (3120); and
the left side wall (3094) comprises a second internal passage (3098) that is a through hole with a first end that fluidically connected to the coolant outlet (3096) and a second end that fluidically connected to the BCA-space (3120).

11. The battery pack of claim 10 further **characterized in that**:
each the right side wall (3093) and the left side wall (3094) further comprises at least one passage interface structure that is configured as a fluidical interface between the internal passage and the BCA-space (3120);
wherein the at least one passage interface structure comprises multiple vertical protrusions (3099) extended from the inner side of the underlying right-side wall (3093) or the left side wall (3094); and
wherein a space between two adjacent vertical protrusions (3099) function as a fluid
channel for the fluid to flow between the internal passage (3098) and the BCA-space (3120).

12. A vehicle (3010) **characterized by** the vehicle (3010) comprising:
a chassis (3020); and
a battery system (3030) comprising at least one battery pack of claim 1 integrated to the chassis (3020).

13. The vehicle (3010) of claim 12 further **characterized in that**:
the battery system (3030) comprises at least one battery cell assembly (0010), a battery management system (3060) and a thermal management system (3070); and
the at least one battery cell assembly (0010) are formed by the battery cells (0020) electrically connected by the at least one BCCM (0026).

14. An assembling process of a battery pack **characterized by** the assembling process comprising:
assembling a plurality of side walls (3090) of an enclosure (3080), wherein the side walls (3090) comprises a front side wall (3091), a rear side wall (3092), a right side wall (3093) and a left side wall (3094), and high-voltage connectors (3097) and signal interface circuit boards (3190) are installed on the front side wall (3091);
installing a coolant inlet (3095) and a coolant outlet (3096) on the right side wall (3093) and the left side wall (3094) respectively;
placing a bottom cell holder (0520) into the enclosure (3080);
assembling a holder connecting member (3140) to the bottom cell holder (0520);
assembling two barriers (3150) to the right side wall (3093) and the left side wall (3094) respectively;
assembling a plurality of battery cells (0020) to the bottom cell holder (0520) within the enclosure (3080);
connecting a part of the high-voltage connector (3097) inside the enclosure (3080) to a contactor (3160) within the enclosure (3080);
assembling a plurality of connecting rods (3170) to a plurality of insertion holes (0529) of the bottom cell holder (0520), wherein the connecting rods (3170) are located between the battery cells (0020) and protrude from above the battery cells (0020);
assembling a top cell holder (0510) to the connecting rods (3170) and above the battery cells (0020);
filling an interstitial material into the enclosure (3080) to fix the battery cells (0020);
disposing a plurality of battery-cell-connecting members (0026) on the top cell holder (0510) and assembling the battery-cell-connecting members (0026) to the battery cells (0020);
sequentially installing two busbars (3181, 3182) into the enclosure (3080), so as to provide high-voltage electrical connection from inside to outside of the battery pack;
installing a battery management system (3060) into the enclosure (3080), so as to provide signal connection from inside to outside of the battery pack;
installing circuit layout of a temperature sensor;
installing a bottom wall (3100) on a bottom of the enclosure (3080); and
installing a top wall (3110) on a top of the enclosure (3080) and installing a plurality of signal outlets (3200) on the top wall (3110).

15. The assembling process of claim 14 further **characterized in that**:
the battery cells (0020) are electrically connected by the battery-cell-connecting members (0026) to form a plurality of battery cell assemblies (0010) electrically connected in series; and
a plurality of battery-cell-assembly-electrodes (0031) are respectively assembled to the right side wall (3093) and the left side wall (3094) to connect the battery cell assemblies (0010) in series, so as to form a battery system (3030).
